# EUROPEAN PATENT APPLICATION

(11) **EP 4 510 111 A1**
(43) Date of publication of application: **19.02.2025**
(21) Application number: 22941761.3
(22) Date of filing: 22.11.2022
(51) Int. Cl.: G09B 29/00, G01C 21/34, G09B 29/10

(54) **MAP CREATION SYSTEM AND ROUTE PLANNING SYSTEM**

(30) Priority: 13.05.2022 JP 2022079354
(71) Applicant: Kubota Corporation, Osaka 556-8601 (JP)
(72) Inventor: TAMATANI, Kenji, Sakai-shi, Osaka 590-0908 (JP)
(74) Representative: Cabinet Beau de Loménie
(86) International application number: PCT/JP2022/043141
(87) International publication number: WO 2023/218688

(57) **Abstract**

A map data generation system includes: a storage device to store map data for an agricultural machine that performs self-driving; and a processing unit. When data of a road is not contained in a predetermined region indicated by the map data, the processing unit generates data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

## Description

### TECHNICAL FIELD

The present disclosure relates to a map data generation system to generate map data for an agricultural machine that performs self-driving, and a path planning system including such a map data generation system.

### BACKGROUND ART

Research and development has been directed to the automation of agricultural machines. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields. Patent Document 1 discloses a system that causes an unmanned work vehicle to perform self-traveling between two fields that are distant from each other across a road.

### CITATION LIST

### PATENT LITERATURE

Patent Document 1: Japanese Laid-Open Patent Publication No. 2021-029218

### SUMMARY OF INVENTION

### TECHNICAL PROBLEM

It is desired to efficiently generate map data for an agricultural machine to perform self-driving.

The present disclosure provides: a map data generation system for efficiently generating map data for an agricultural machine that performs self-driving; and a path planning system including such a map data generation system.

### SOLUTION TO PROBLEM

A map data generation system according to one implementation of the present disclosure comprises: a storage device to store map data for an agricultural machine that performs self-driving; and a processing unit to, when data of a road is not contained in a predetermined region indicated by the map data, generate data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

### ADVANTAGEOUS EFFECTS OF INVENTION

According to embodiments of the present disclosure, there are provided: a system that efficiently generates a map for an agricultural machine that performs self-driving; and a path planning system including such a map data generation system.

### BRIEF DESCRIPTION OF DRAWINGS

[FIG. **1**] A diagram providing an overview of an agriculture management system according to an illustrative embodiment of the present disclosure.
[FIG. **2**] A side view schematically showing an example of a work vehicle and an example of an implement linked to the work vehicle.
[FIG. **3**] A block diagram showing an example configuration of the work vehicle and the implement.
[FIG. **4**] A conceptual diagram showing an example of a work vehicle performing positioning based on an RTK-GNSS.
[FIG. **5**] A diagram showing an example of an operational terminal and an example of operation switches that are provided inside a cabin.
[FIG. **6**] A block diagram showing an example of schematic hardware configuration of a management device and a terminal device.
[FIG. **7**] A diagram schematically showing an example of a work vehicle automatically traveling along a target path inside a field.
[FIG. **8**] A flowchart showing an example operation of steering control to be performed during self-driving.
[FIG. **9A**] A diagram showing an example of a work vehicle traveling along a target path **P.**
[FIG. **9B**] A diagram showing an example of a work vehicle at a position which is shifted rightward from the target path **P.**
[FIG. **9C**] A diagram showing an example of a work vehicle at a position which is shifted leftward from the target path **P.**
[FIG. **9D**] A diagram showing an example of a work vehicle oriented in an inclined direction with respect to the target path **P.**
[FIG. **10**] A diagram schematically showing an example situation where a plurality of work vehicles are self-traveling inside a field and on a road outside the field.
[FIG. **11**] A diagram showing an example of a setting screen that is displayed on the terminal device.
[FIG. **12**] A diagram showing an example of a schedule of agricultural tasks to be generated by the management device.
[FIG. **13A**] A diagram showing an example region in which a work vehicle travels.
[FIG. **13B**] A diagram schematically showing a map of a region in FIG. **13A** that is surrounded by broken lines.
[FIG. **13C**] A schematic diagram for describing a procedure by which a map data generation system generates map data by using the map data of FIG. **13B****.**
[FIG. **13D**] A schematic diagram for describing a procedure by which a map data generation system generates map data by using the map data of FIG. **13B****.**
[FIG. **14****]** A flowchart showing an example procedure by which a processing unit generates map data.
[FIG. **15A**] A diagram showing examples of reception intensities of satellite signals.
[FIG. **15B**] A diagram showing other examples of reception intensities of satellite signals.
[FIG. **16**] A diagram showing an example of a global path and a local path that are generated in an environment in which an obstacle exists.
[FIG. **17**] A flowchart showing a method of path planning and travel control.

### DESCRIPTION OF EMBODIMENTS

### (Definition of terms)

In the present disclosure, an "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Self-driving" refers to controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work (e.g., the operation of the implement) may be controlled automatically. In the case where the agricultural machine is a vehicle-type machine, travel of the agricultural machine via self-driving will be referred to as "self-traveling". The controller may be configured or programmed to control at least one of: steering that is required in the movement of the agricultural machine; adjustment of the moving speed; and beginning and ending of a move. In the case of controlling a work vehicle having an implement attached thereto, the controller may control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also move partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of an agricultural machine will be referred to as "automatic steering". A part of, or the entirety of, the controller may be located outside the agricultural machine. Control signals, commands, data, etc., may be communicated between the agricultural machine and a controller located outside the agricultural machine. An agricultural machine that performs self-driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

A "work plan" is data defining a plan of one or more tasks of agricultural work to be performed by an agricultural machine. The work plan may include, for example, information representing the order of the tasks of agricultural work to be performed by an agricultural machine or the field where each of the tasks of agricultural work is to be performed. The work plan may include information of the date and the time when each of the tasks of agricultural work is to be performed. A work plan containing information of the date and time tasks of agricultural work are planned to be performed may referred to as a "task schedule" or simply as a "schedule" in particular. A task schedule may contain information of a scheduled start time and/or a scheduled end time of each task of agricultural work to be performed on each work day. For each task of agricultural work, the work plan or task schedule may contain information of the content of work, the implement used, and/or the type and amount of agricultural material used, etc. As used herein, "agricultural materials" refer to supply to be used in the agricultural work performed by an agricultural machine. An agricultural material my simply be referred to as a "material". Agricultural materials may include supplies to be consumed in agricultural work, such as agrochemicals, fertilizers, seeds, seedlings, etc., for example. The work plan may be generated by a processing unit communicating with the agricultural machine to manage the agricultural work, or a processing unit mounted on the agricultural machine. The processing unit can generate a work plan based on, for example, information input by the user (farm manager, agricultural worker, etc.) manipulating a terminal device. In the present specification, a processing unit communicating with the agricultural machine to manage the agricultural work will be referred to as a "management device". The management device may manage agricultural work of a plurality of agricultural machines. In this case, the management device may generate a work plan including information on each task of agricultural work to be performed by each of the plurality of agricultural machines. The work plan may be downloaded to each agricultural machine and stored in a storage device. In order to perform the scheduled agricultural work in accordance with the work plan, each agricultural machine can automatically move to a field and perform the agricultural work.

An "environment map" is data representing, with a predetermined coordinate system, the position or the region of an object existing in the environment where the agricultural machine moves. The environment map may be referred to simply as a "map" or "map data". The coordinate system defining the environment map is, for example, a world coordinate system such as a geographic coordinate system fixed to the globe. Regarding an object existing in the environment, the environment map may include information other than the position (e.g., attribute information or other types of information). The "environment map" encompasses various type of maps such as a point cloud map and a grid map. Data on a local map or a partial map that is generated or processed in a process of constructing the environment map is also referred to as a "map" or "map data".

An "agricultural road" is a road used mainly for agriculture. An "agricultural road" is not limited to a road paved with asphalt, and encompasses unpaved roads covered with soil, gravel or the like. An "agricultural road" encompasses roads (including private roads) on which only vehicle-type agricultural machines (e.g., work vehicles such as tractors, etc.) are allowed to travel and roads on which general vehicles (cars, trucks, buses, etc.) are also allowed to travel. The work vehicles may automatically travel on a general road in addition to an agricultural road. The "general road" is a road maintained for traffic of general vehicles.

"Geographic features" mean things on the ground. Examples of geographic features include channels, grasses, trees, roads, fields, trenches, rivers, bridges, woods, mountains, rocks, buildings, railroad tracks, and so on. Things that do not exist in the real world, e.g., border lines, names of places, building names, field names, and route names, are not included among the "geographic features" in the present disclosure.

A "GNSS satellite" means an artificial satellite in a Global Navigation Satellite System (GNSS). GNSS is a collective term for satellite positioning systems such as the GPS (Global Positioning System), QZSS (Quasi-Zenith Satellite System), GLONASS, Galileo, and BeiDou. GNSS satellites are satellites in these positioning systems. A signal transmitted from a GNSS satellite is called a "satellite signal". A "GNSS receiver" is a device that receives radio waves transmitted from a plurality of satellites in a GNSS and performs positioning based on signals superposed on the radio waves. "GNSS data" is data that is output from a GNSS receiver, which may be generated in a predetermined format such as NMEA-0183 format, etc. GNSS data may include, for example, information indicating the reception statuses of satellite signals received from individual satellites. For example, GNSS data can include values indicating the ID number, angle of elevation, azimuth angle, and reception intensity of each satellite from which a satellite signal was received. Reception intensity is a numerical value indicating the intensity of a received satellite signal. Reception intensity can be expressed in values such as Carrier to Noise Density Ratio (C/N0). GNSS data can include positional information of the GNSS receiver or agricultural machine as calculated based on a plurality of received satellite signals. The positional information can be expressed by latitude, longitude, and height above mean sea level, etc., for example. GNSS data may further include information indicating the reliability of the positional information.

That "satellite signals can be properly received" means that it is possible to receive satellite signals stably enough for not significantly degrading positioning reliability. A state where satellite signals cannot be properly received may be expressed as "reception problems for satellite signals" being present. "Reception problems for satellite signals" are a condition in which the reception status of satellite signals deteriorates, thus resulting in a decreased positioning reliability as compared to the normal condition. Reception problems may occur, for example: when the number of detected satellites is small (e.g., 3 or less); when the reception intensity of each satellite signal is low; or when multipath is occurring. Whether or not reception problems are present can be determined based on information concerning satellites that is contained in the GNSS data, for example. For example, the presence or absence of reception problems can be determined based on the value of reception intensity for each satellite that is contained in the GNSS data, or DOP (Dilution of Precision) values that indicate a deployment status of satellites.

A "global path" means data of a path of an agricultural machine when automatically moving from a departure point to a destination point, the data being generated by a processing unit that performs path planning. Generation of a global path is referred to as global path planning. In the following description, a global path is referred to as a "target path" or simply as a "path". A global path may be defined by the coordinate values of a plurality of points for an agricultural machine to pass through, for example. A point for an agricultural machine to pass through is referred to as a "waypoint", whereas a line segment connecting adjacent waypoints is referred to as a "link".

A "local path" means a locally-present path that allows for avoiding an obstacle, such a path being consecutively generated when an agricultural machine automatically moves along a global path. Generation of a local path is referred to as local path planning. While an agricultural machine is moving, local paths are consecutively generated based on data that is acquired by one or more sensing devices included in the agricultural machine. A local path may be defined by a plurality of waypoints along a portion of a global path. However, when an obstacle exists near the global path, waypoints may be set so as to detour around that obstacle. The length of a link between waypoints of a local path is shorter than the length of a link between waypoints of a global path. The device that generates local paths may be the same as or different from the device that generates global paths. For example, a management device to manage the agricultural work by an agricultural machine may generate global paths, and a controller mounted on the agricultural machine may generate local paths. In that case, a combination of the management device and the controller functions as a "processing unit" that performs path planning. The controller of the agricultural machine may function as a processing unit that performs both of global path planning and local path planning.

A "storage location" is a place that is provided for storing an agricultural machine. The storage location may be, for example, a place that is managed by a user, or a place that is jointly operated by a plurality of users, of an agricultural machine. The storage location may be a place that is set aside for storing an agricultural machine, in the home or office of the user(s) (agricultural worker(s), etc.), e.g., a warehouse, a barn, or a parking space. The position of the storage location may be previously registered, and recorded in a storage device.

A "standby location" is a place provided for an agricultural machine to stand by while not performing agricultural work. One or more standby locations may be provided within an environment where the agricultural machine performs self-driving. The aforementioned storage location is an example of a standby location. A standby location may be a place that is jointly managed or used by a plurality of users. Standby locations may be warehouses, garages, barns, parking spaces, or other facilities, for example. A standby location may be a warehouse, a barn, a garage, or a parking space at the home or office of an agricultural worker other than the user(s) of the agricultural machine. A plurality of standby locations may exist within an environment in which the agricultural machine moves. Work may be performed at a standby location, such as the exchange or maintenance of parts of the agricultural machine or an implement, or replenishment of materials, etc. In that case, parts, tools, or materials that are necessary for such work may be placed at the standby location.

### (embodiments)

Hereinafter, embodiments of the present disclosure will be described. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

General or specific aspects of the present disclosure may be implemented using a device, a system, a method, an integrated circuit, a computer program, a nontransitory computer-readable storage medium, or any combination thereof. The computer-readable storage medium may be inclusive of a volatile storage medium, or a nonvolatile storage medium. The device may include a plurality of devices. In the case where the device includes two or more devices, the two or more devices may be disposed within a single apparatus, or divided over two or more separate apparatuses.

The following embodiments are only exemplary, and the technique according to the present disclosure is not limited to the following embodiments. For example, numerical values, shapes, materials, steps, and orders of steps, layout of a display screen, etc., that are indicated in the following embodiments are only exemplary, and admit of various modifications so long as it makes technological sense. Any one implementation may be combined with another so long as it makes technological sense to do so.

Hereinafter, an embodiment in which a technique according to the present disclosure is applied to a work vehicle, such as a tractor, which is an example of agricultural machine, will be mainly described. The technique according to the present disclosure is also applicable to other types of agricultural machines, in addition to work vehicles such as tractors.

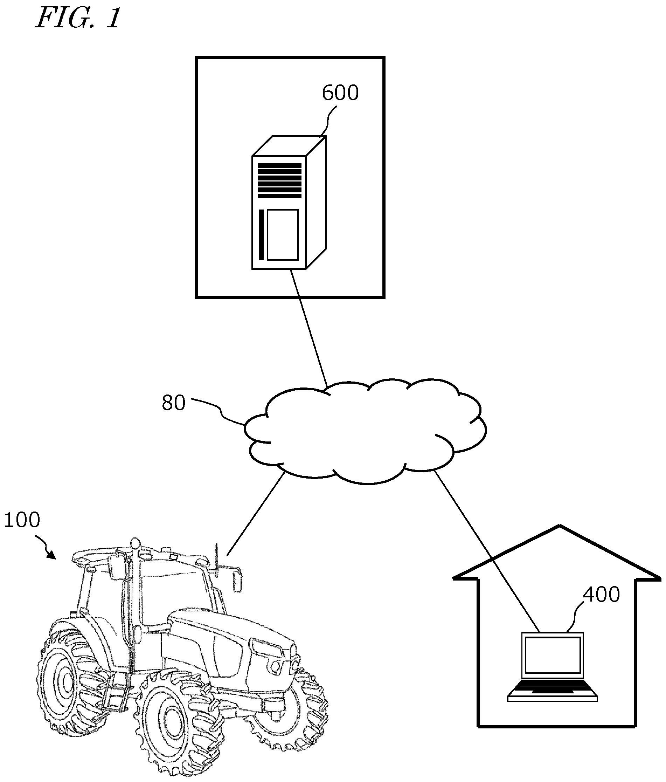

FIG. **1** is a diagram providing an overview of an agriculture management system according to an illustrative embodiment of the present disclosure. The agriculture management system shown in FIG. **1** includes a work vehicle **100,** a terminal device **400,** and a management device **600.** The terminal device **400** is a computer used by a user performing remote monitoring of the work vehicle **100.** The management device **600** is a computer managed by a business operator running the agriculture management system. The work vehicle **100,** the terminal device **400,** and the management device **600** can communicate with one another via the network **80.** Although FIG. **1** illustrates one work vehicle **100,** the agriculture management system may include a plurality of the work vehicles or any other agricultural machine.

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or a LiDAR sensor. Based on the position of the work vehicle **100** and information on a target path generated by the management device **600,** the controller of the work vehicle **100** causes the work vehicle **100** to automatically travel. In addition to controlling the travel of the work vehicle **100,** the controller also controls the operation of the implement. As a result, while automatically traveling inside the field, the work vehicle **100** is able to perform agricultural work by using the implement. In addition, the work vehicle **100** is able to automatically travel along a target path on a road outside the field (e.g., an agricultural road or a general road). When performing self-traveling along a road outside the field, the work vehicle **100** travels along a target path while generating local paths that allow for avoiding obstacles, based on data that is output from a sensing device, such as a camera or a LiDAR sensor. Inside the field, the work vehicle **100** may travel while generating local paths similarly to the above, or perform an operation of traveling along a target path without generating local paths, and stopping upon detection of an obstacle.

The management device **600** is a computer to manage the agricultural work performed by the work vehicle **100.** The management device **600** may be, for example, a server computer that performs centralized management of information regarding the field on a cloud and assists in agriculture by using data on the cloud. The management device **600** may, for example, generate a work plan for the work vehicle **100,** and in accordance with the work plan, generate a target path for the work vehicle **100.** Alternatively, the management device **600** may generate a target path for the work vehicle **100** in response to the user's operation via the terminal device **400.** Hereinafter, unless otherwise specified, a target path for the work vehicle **100** generated by the management device **600** (i.e., a global path) will simply be referred to as a "path".

The management device **600** includes a storage device and a processing unit. The storage device stores map data for the work vehicle **100** to perform self-driving. Based on a trajectory of a vehicle including a GNSS receiver in a predetermined region indicated by the map data, the trajectory being acquired based on GNSS data that is output from the GNSS receiver when the vehicle travels in the predetermined region, and also on attribute information of the vehicle, the processing unit generates data of a road in the predetermined region. Through such processing, as will be described below in detail, a map for the work vehicle **100** that performs self-driving can be efficiently generated.

Depending on whether it is inside the field or outside the field, the management device **600** generates a target path with a different method. The management device **600** generates a target path inside the field based on information concerning the field. For example, the management device **600** can generate a target path inside the field based on various information, e.g., outer shape of the field, field area, entrance/exit positions of the field, width of the work vehicle **100,** width of the implement, content of work, kind of crop to be cultivated, crop growth area, crop growth status, or intervals between crop rows or ridges, that are previously registered. The management device **600** generates a target path inside the field based on information that is input by the user using the terminal device **400** or other devices, for example. The management device **600** generates a path inside the field so as to cover the entirety of a work area in which tasks are to be performed, for example. On the other hand, the management device **600** generates a target path outside the field in accordance with a work plan or the user's instruction. For example, the management device **600** can generate a target path outside the field based on various information, e.g., order of tasks of agricultural work indicated by the work plan, positions in the field where tasks of agricultural work are to be performed, entrance/exit positions in the field, a scheduled start time and a scheduled end time of each task of agricultural work, attribute information of each road recorded in the map, state of the road surface, weather status, or traffic status. Regardless of the work plan, the management device **600** may generate a target path based on information indicating a path or a waypoint(s) designated by the user through operation of the terminal device **400.**

In addition, the management device **600** may generate or edit an environment map based on data collected by the work vehicle **100** or any other movable unit by using the sensing device such as a LiDAR sensor. The management device 600 transmits data on the work plan, the target path, and the environment map thus generated to the work vehicle **100.** The work vehicle **100** automatically moves and performs agricultural work based on these data.

Note that the global path planning and generation (or editing of) the environment map may be performed by not only the management device **600** but also any other device. For example, the controller of the work vehicle **100** may perform global path planning or generation or editing of the environment map.

The terminal device **400** is a computer that is used by a user who is at a remote place from the work vehicle **100.** Although the terminal device **400** shown in FIG. **1** is a laptop computer, the terminal device **400** is not limited to this. The terminal device **400** may be a stationary computer such as a desktop PC (personal computer), or a mobile terminal such as a smartphone or a tablet computer. The terminal device **400** may be used to perform remote monitoring of the work vehicle **100** or remote-manipulate the work vehicle **100.** For example, the terminal device **400** can indicate, on a display thereof, a video captured by one or more cameras (imagers) included in the work vehicle **100.** By looking at the video, the user is able to check the status of the surroundings of the work vehicle **100,** and send an instruction to the work vehicle **100** to halt or pull out. The terminal device **400** can also indicate, on the display thereof, a setting screen allowing the user to input information necessary to generate a work plan (e.g., a schedule of tasks of agricultural work) for the work vehicle **100.** When the user inputs necessary information to the setting screen and performs an operation to transmit the information, the terminal device **400** transmits the input information to the management device **600.** The management device **600** generates a work plan based on the information. The terminal device **400** may further have a function of indicating, on the display thereof, a setting screen allowing the user to input information necessary to set a target path. The terminal device **400** may also be used to register one or more fields in which the work vehicle **100** is to perform agricultural work, a storage location for the work vehicle **100,** and one or more standby locations in which the work vehicle **100** is to temporarily stand by.

Hereinafter, a configuration and an operation of the system according to the present embodiment will be described in more detail.

### [1. configuration]

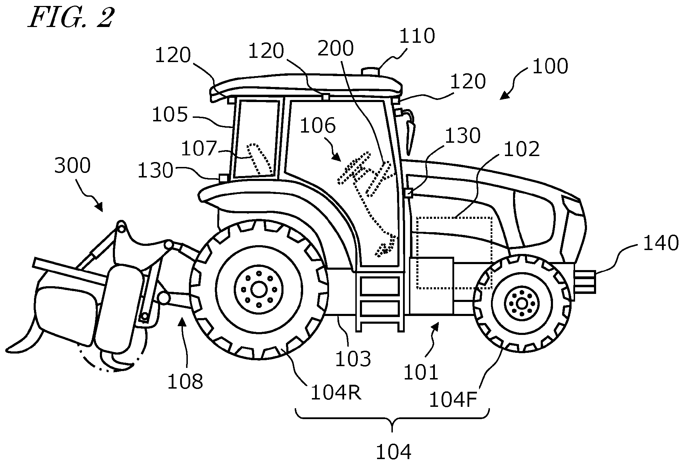

FIG. **2** is a side view schematically showing an example of the work vehicle **100** and an example of an implement **300** linked to the work vehicle **100.** The work vehicle **100** according to the present embodiment can operate both in a manual driving mode and a self-driving mode. In the self-driving mode, the work vehicle **100** is able to perform unmanned travel. The work vehicle **100** can perform self-driving both inside a field and outside the field.

As shown in FIG. **2****,** the work vehicle **100** includes a vehicle body **101,** a prime mover (engine) **102,** and a transmission **103.** On the vehicle body **101,** wheels **104** with tires and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for operation are provided. In the case where the work vehicle **100** performs tasked travel inside the field, the front wheels **104F** and/or the rear wheels **104R** may be replaced by a plurality of wheels with a track (crawlers); rather than wheels with tires, attached thereto.

The work vehicle **100** includes at least one sensing device to sense the surrounding environment of the work vehicle **100.** In the example shown in FIG. **2****,** the work vehicle **100** includes a plurality of sensing devices. The sensing devices include a plurality of cameras **120,** a LiDAR sensor **140,** and a plurality of obstacle sensors **130.**

The cameras **120** may be provided at the front/rear/right/left of the work vehicle **100,** for example. The cameras **120** image the surrounding environment of the work vehicle **100** and generate image data. The images acquired with the cameras **120** may be transmitted to the terminal device **400,** which is responsible for remote monitoring. The images may be used to monitor the work vehicle **100** during unmanned driving. The cameras **120** may also be used to generate images to allow the work vehicle **100,** traveling on a road outside the field (an agricultural road or a general road), to recognize geographic features, obstacles, white lines, road signs, indications or the like in the surroundings.

The LiDAR sensor **140** in the example shown in FIG. **2** is disposed on a lower portion of a front face of the vehicle body **101.** The LiDAR sensor **140** may be disposed at any other position. For example, the LiDAR sensor **140** may be disposed on an upper portion of the cabin **105.** The LiDAR sensor **140** may be a 3D-LiDAR sensor, but may also be a 2D-LiDAR sensor. The LiDAR sensor **140** senses the surrounding environment of the work vehicle **100** and outputs sensor data. While the work vehicle **100** is traveling, the LiDAR sensor **140** repeatedly outputs sensor data representing the distances and directions of measurement points on objects existing in the surrounding environment, or two-dimensional or three-dimensional coordinate values of such measurement points. The sensor data that is output from the LiDAR sensor **140** is processed by the controller of the work vehicle **100.** The controller can perform localization of the work vehicle **100** by matching the sensor data against the environment map. The controller can further detect an object such as an obstacle existing in the surroundings of the work vehicle **100** based on the sensor data. The controller can utilize an algorithm such as, for example, SLAM (Simultaneous Localization and Mapping) to generate or edit an environment map. The work vehicle **100** may include a plurality of LiDAR sensors disposed at different positions with different orientations.

The plurality of obstacle sensors **130** shown in FIG. **2** are provided at the front and the rear of the cabin **105.** The obstacle sensors **130** may be disposed at other positions. For example, one or more obstacle sensors **130** may be disposed at any position at the sides, the front, or the rear of the vehicle body **101.** The obstacle sensors **130** may include, for example, laser scanners or ultrasonic sonars. The obstacle sensors **130** may be used to detect obstacles in the surroundings during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. GNSS is a collective term for satellite positioning systems such as the GPS (Global Positioning System), QZSS (Quasi-Zenith Satellite System, e.g., MICHIBIKI), GLONASS, Galileo, and BeiDou. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensor data acquired with the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road, or an orchard, the position and the orientation of the work vehicle **100** can be estimated with a high accuracy based on data that is acquired with the cameras **120** or the LiDAR sensor **140** and on an environment map that is previously stored in the storage device. By correcting or complementing position data based on the satellite signals using the data acquired with the cameras **120** or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided at the front portion of the vehicle body **101.** In that case, the implement can be connected at the front portion of the work vehicle **100.**

Although the implement **300** shown in FIG. **2** is a rotary tiller, the implement **300** is not limited to a rotary tiller. For example, any arbitrary implement such as a seeder, a spreader, a transplanter, a mower, a rake, a baler, a harvester, a sprayer, or a harrow, can be connected to the work vehicle **100** for use.

The work vehicle **100** shown in FIG. **2** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** can travel via autonomous driving, or by remote operation by a user.

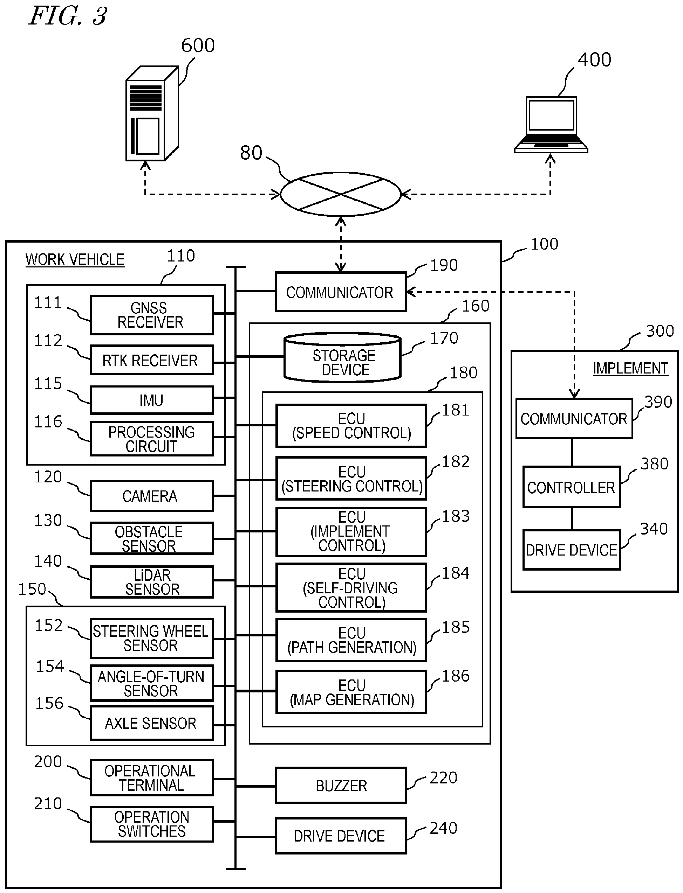

FIG. **3** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the LiDAR sensor **140,** and the operational terminal **200,** the work vehicle **100** in the example of FIG. **3** includes sensors **150** to detect the operating status of the work vehicle **100,** a control system **160,** a communicator **190,** operation switches **210,** a buzzer **220,** and a drive device **240.** These component elements are communicably connected to one another via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and an axle sensor **156.** The control system **160** includes a storage device 170 and a controller **180.** The controller **180** includes a plurality of electronic control units (ECU) 181 to **186.** The implement **300** includes a drive device **340,** a controller **380,** and a communicator **390.** Note that FIG. **3** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the ID number, the angle of elevation, the azimuth angle, and a value representing the reception intensity of each of the satellites from which the satellite signals are received. Reception intensity may be expressed by a value such as carrier to noise density ratio (C/N0), for example. GNSS data may include positional information of the work vehicle **100** as calculated based on a plurality of received satellite signals and information indicating the reliability of that positional information. The positional information may be expressed in terms of latitude, longitude, height from the mean sea level, for example. The reliability of positional information may be expressed in terms of a DOP value that indicates the deployment status of the satellites or the like, for example.

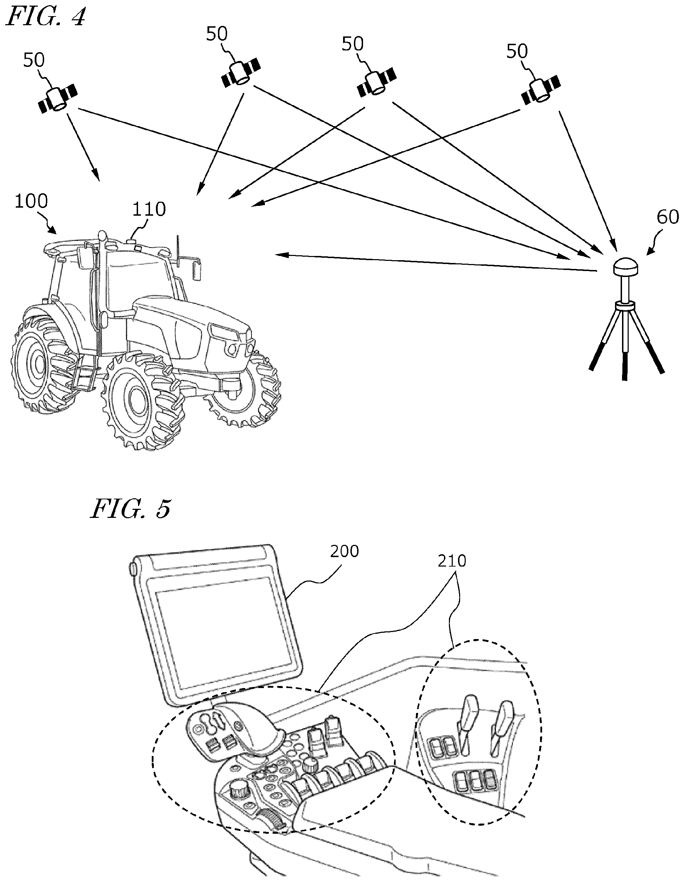

The GNSS unit **110** shown in FIG. **3** performs positioning of the work vehicle **100** by utilizing an RTK (Real Time Kinematic) -GNSS. FIG. **4** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field where the work vehicle **100** performs tasked travel (e.g., at a position within 10 km of the work vehicle **100).** The reference station **60** generates a correction signal of, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60.** Based on the correction signal, the processing circuit **116** of the GNSS unit **110** corrects the results of the positioning performed by the GNSS receiver **111.** Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by using an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a place where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data that is output from the LiDAR sensor **140** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100.** Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the GNSS unit **110.**

The cameras **120** are imagers that image the surrounding environment of the work vehicle **100.** Each camera **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image (e.g., motion picture) data. The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning or detection of obstacles. As shown in FIG. **2****,** the plurality of cameras **120** may be provided at different positions on the work vehicle **100,** or a single camera **120** may be provided. A visible camera(s) to generate visible images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime.

The obstacle sensors **130** detect objects existing in the surroundings of the work vehicle **100.** Each obstacle sensor **130** may include a laser scanner or an ultrasonic sonar, for example. When an object exists at a position within a predetermined distance from an obstacle sensor **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle 100.

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The axle sensor **156** measures the rotational speed, i.e., the number of revolutions per unit time, of an axle that is connected to the wheels **104.** The axle sensor **156** may be a sensor including a magnetoresistive element (MR), a Hall generator, or an electromagnetic pickup, for example. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The buzzer **220** is an audio output device to present an alarm sound for alerting the user of an abnormality. For example, the buzzer **220** may present an alarm sound when an obstacle is detected during self-driving. The buzzer **220** is controlled by the controller **180.**

The storage device **170** includes one or more storage media such as a flash memory or a magnetic disc. The storage device **170** stores various data that is generated by the GNSS unit **110,** the cameras **120,** the obstacle sensors **130,** the LiDAR sensor **140,** the sensors **150,** and the controller **180.** The data that is stored by the storage device **170** may include map data on the environment where the work vehicle **100** travels (environment map) and data on global path (target path) for self-driving. The environment map contains information on a plurality of fields where the work vehicle **100** performs agricultural work and roads around the fields. The environment map and the target path may be generated by a processing unit (processor) in the management device **600.** The controller **180** may have a function of generating or editing an environment map and a target path. The controller **180** can edit the environment map and the target path, acquired from the management device **600,** in accordance with the environment where the work vehicle **100** travels. The storage device **170** also stores data on a work plan received by the communicator **190** from the management device **600.**

A work plan contains information on a plurality of tasks of agricultural work for the work vehicle **100** to perform over a plurality of work days. The work plan may be data of a task schedule containing information on scheduled times of each task of agricultural work to be performed by the work vehicle **100** on each work day, for example.

The storage device **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, the ECU **184** for self-driving control, the ECU **185** for path generation, and the ECU **186** for map generation.

The ECU **181** controls the prime mover **102,** the transmission **103,** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

Based on data output from the GNSS unit **110,** the cameras **120,** the obstacle sensors **130,** the LiDAR sensor **140,** and the sensors **150,** the ECU **184** performs computation and control for achieving self-driving. For example, the ECU **184** specifies the position of the work vehicle **100** based on the data output from at least one of the GNSS unit **110,** the cameras **120,** and the LiDAR sensor **140.** Inside the field, the ECU **184** may determine the position of the work vehicle **100** based only on the data output from the GNSS unit **110.** The ECU **184** may estimate or correct the position of the work vehicle **100** based on the data acquired with the cameras **120** or the LiDAR sensor **140.** Using the data acquired with the cameras **120** or the LiDAR sensor **140** allows the accuracy of the positioning to be further improved. Outside the field, the ECU **184** estimates the position of the work vehicle **100** by using the data output from the LiDAR sensor **140** or the cameras **120.** For example, the ECU **184** may estimate the position of the work vehicle **100** by matching the data output from the LiDAR sensor **140** or the cameras **120** against the environment map. During self-driving, the ECU **184** performs computation necessary for the work vehicle **100** to travel along a target path or a local path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

While the work vehicle **100** is traveling along a target path, the ECU **185** consecutively generates local paths that allow for avoiding obstacles. During travel of the work vehicle **100,** based on data output from the cameras **120,** the obstacle sensors **130,** and the LiDAR sensor **140,** the ECU **185** recognizes obstacles existing in the surroundings of the work vehicle **100.** The ECU **185** generates local paths so as to avoid any recognized obstacle.

The ECU **185** may have a function of performing global path planning in the place of the management device **600.** In that case, the ECU **185** determines a moving destination of the work vehicle **100** based on a work plan stored in the storage device **170,** and determines a target path from a start point to a destination point of movement of the work vehicle **100.** Based on an environment map stored in the storage device **170** including road information, the ECU **185** can generate a path that reaches the moving destination in the shortest possible time as a target path, for example. Alternatively, based on the attribute information of each road contained in the environment map, the ECU **185** may generate a path that gives priority to a particular type of roads (e.g., roads following along a particular geographic feature such as an agricultural road or a channel; roads that allow satellite signals from the GNSS satellites to be received well; or the like) as a target path.

The ECU **186** generates or edits a map of the environment that is traveled by the work vehicle **100.** In the present embodiment, an environment map that is generated by an external device such as the management device **600** is transmitted to the work vehicle **100,** and recorded to the storage device **170;** however, the ECU **186** may generate or edit the environment map instead. Hereinafter, an operation in the case where the ECU **186** generates the environment map will be described. The environment map may be generated based on the sensor data output from the LiDAR sensor **140.** When generating the environment map, the ECU **186** consecutively generates three-dimensional point cloud data based on the sensor data being output from the LiDAR sensor **140** while the work vehicle **100** is traveling. By joining together consecutively generated point cloud data with the use of an algorithm such as SLAM, for example, the ECU **186** can generate an environment map. An environment map thus generated is a highly accurate three-dimensional map, which may be utilized for localization by the ECU **184.** Based on this three-dimensional map, a two-dimensional map for use in global path planning can be generated. In the present specification, a three-dimensional map for use in localization and a two-dimensional map for use in global path planning are both referred to as "environment maps". Furthermore, the ECU **186** can also edit the map by adding various attribute information to the map, such as geographic features (e.g., channels, rivers, grasses, trees, etc.), road types (e.g., whether it is an agricultural road or not), state of the road surface, or accessibility of the road, that is recognized based on data output from the cameras **120** or the LiDAR sensor **140.**

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with one another in accordance with a vehicle bus standard such as, for example, a CAN (Controller Area Network). Instead of a CAN, faster communication methods such as Automotive Ethernet (registered trademark) may be used. Although the ECUs **181** to **186** are illustrated as individual blocks in FIG. **3****,** the function of each of the ECU **181 to 186** may be implemented by a plurality of ECUs. Alternatively, an onboard computer that integrates the functions of at least some of the ECUs **181** to **186** may be provided. The controller **180** may include ECUs other than the ECUs **181** to **186,** and any number of ECUs may be provided in accordance with functionality. Each ECU includes a processing circuit including one or more processors.

The communicator **190** is a device including a circuit communicating with the implement **300,** the terminal device **400,** and the management device **600.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may further include an antenna and a communication circuit to exchange signals via the network **80** with the respective communicators of the terminal device **400** and the management device **600.** The network **80** may include a 3G, 4G, 5G, or any other cellular mobile communications network and the Internet, for example. The communicator **190** may have a function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The operational terminal **200** is a terminal for the user to perform an operation related to the travel of the work vehicle **100** and the operation of the implement **300,** and is also referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various operations, such as, for example, switching ON/OFF the self-driving mode, recording or editing an environment map, setting a target path, and switching ON/OFF the implement **300.** At least a part of these operations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

FIG. **5** is a diagram showing an example of the operational terminal **200** and an example of the operation switches **210** that are provided inside the cabin **105.** Inside the cabin **105,** the operation switches **210,** including a plurality of switches that are manipulable to the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

The drive device **340** in the implement **300** shown in FIG. **3** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

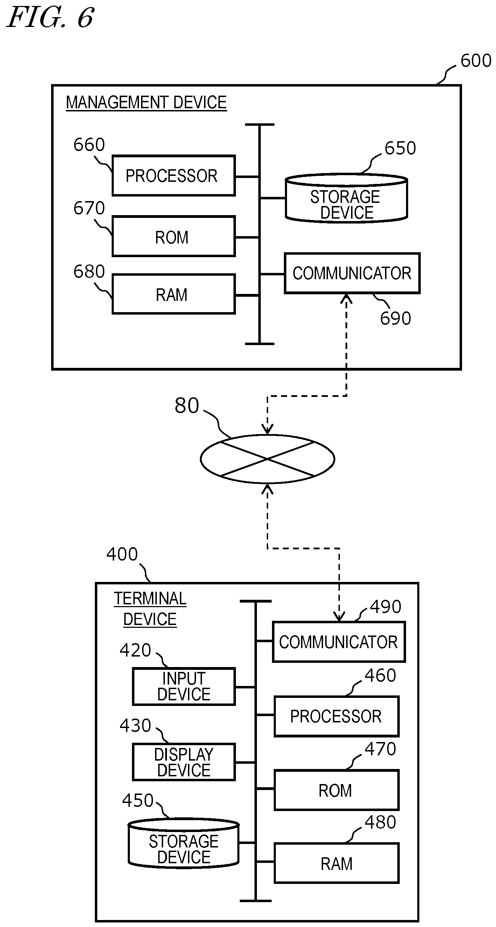

Now, a configuration of the management device **600** and the terminal device **400** will be described with reference to FIG. **6.** FIG. **6** is a block diagram showing an example of schematic hardware configuration of the management device **600** and the terminal device **400.**

The management device **600** includes a storage device **650,** a processor **660,** a ROM (Read Only Memory) **670,** a RAM (Random Access Memory) **680,** and a communicator **690.** These component elements are communicably connected to one another via a bus. The management device **600** may function as a cloud server to manage the schedule of the agricultural work to be performed by the work vehicle **100** in a field and assist in agriculture by using data that is managed thereby. The user can use the terminal device **400** to input information necessary to generate a work plan and upload the information to the management device **600** via the network **80.** The management device **600** can generate a schedule of agricultural work, i.e., a work plan, based on the information. The management device **600** can further generate or edit an environment map. The environment map may be distributed from a computer external to the management device **600.**

The communicator 690 is a communication module to communicate with the work vehicle **100** and the terminal device **400** via the network **80.** The communicator **690** can perform wired communication in compliance with communication standards such as, for example, IEEE1394 (registered trademark) or Ethernet (registered trademark). The communicator **690** may perform wireless communication in compliance with the Bluetooth (registered trademark) or Wi-Fi standards, or cellular mobile communication based on 3G, 4G, 5G or any other cellular mobile communication standard.

The processor **660** may be, for example, a semiconductor integrated circuit including a central processing unit (CPU). The processor **660** may be realized by a microprocessor or a microcontroller. Alternatively, the processor **660** may be realized by an FPGA (Field Programmable Gate Array), a GPU (Graphics Processing Unit), an ASIC (Application Specific Integrated Circuit), or an ASSP (Application Specific Standard Product) having a CPU mounted thereon, or a combination of two or more selected from these circuits. The processor **660** consecutively executes a computer program, describing instructions to execute at least one process, stored in the ROM **670** and thus realizes a desired process.

The ROM **670** is, for example, a writable memory (e.g., PROM), a rewritable memory (e.g., flash memory) or a readonly memory. The ROM **670** stores a program to control operations of the processor **660.** The ROM **670** does not need to be a single storage medium, and may be an assembly of a plurality of storage mediums. A part of the assembly of the plurality of storage media may be a removable memory.

The RAM **680** provides a work area in which the control program stored in the ROM **670** is once laid out at the time of boot. The RAM **680** does not need to be a single storage medium, and may be an assembly of a plurality of storage mediums.

The storage device **650** mainly functions as a storage for a database. The storage device **650** may be, for example, a magnetic storage device or a semiconductor storage device. An example of the magnetic storage device is a hard disk drive (HDD). An example of the semiconductor storage device is a solid state drive (SSD). The storage device **650** may be a device independent from the management device **600.** For example, the storage device **650** may be a storage device connected to the management device **600** via the network **80,** for example, a cloud storage.

The terminal device **400** includes an input device **420,** a display device **430,** a storage device **450,** a processor **460,** a ROM **470,** a RAM **480,** and a communicator **490.** These component elements are communicably connected to one another via a bus. The input device **420** is a device to convert an instruction from the user into data and input the data to a computer. The input device **420** may be, for example, a keyboard, a mouse or a touchscreen panel. The display device **430** may be, for example, a liquid crystal display or an organic EL display. The description of the processor **460,** the ROM **470,** the RAM **480,** the storage device **450,** and the communicator **490,** which will be the same as set forth with respect to the example hardware configuration of the management device **600,** will be omitted.

### [2. operation]

Next, operations of the work vehicle **100,** the terminal device **400,** and the management device **600** will be described.

### [2-1. self-traveling operation]

First, an example operation of self-traveling of the work vehicle **100** will be described. The work vehicle **100** according to the present embodiment can automatically travel both inside and outside a field. Inside the field, the work vehicle **100** drives the implement **300** to perform predetermined agricultural work while traveling along a previously-set target path. Upon detecting an obstacle with the obstacle sensors **130** while traveling inside the field, the work vehicle **100** may halt traveling and perform operations of presenting an alarm sound from the buzzer **220,** transmitting an alert signal to the terminal device **400** and the like, for example. Inside the field, the positioning of the work vehicle **100** is performed based mainly on data output from the GNSS unit **110.** On the other hand, outside the field, the work vehicle **100** automatically travels along a target path set for an agricultural road or a general road outside the field. While traveling outside the field, the work vehicle **100** utilizes the data acquired by the cameras **120** or the LiDAR sensor **140.** When an obstacle is detected outside the field, the work vehicle **100** avoids the obstacle or halts in that place, for example. Outside the field, the position of the work vehicle **100** is estimated based on data output from the LiDAR sensor **140** or the cameras **120** in addition to positioning data output from the GNSS unit **110.**

Hereinafter, an example operation of the work vehicle **100** when self-traveling inside the field will be described.

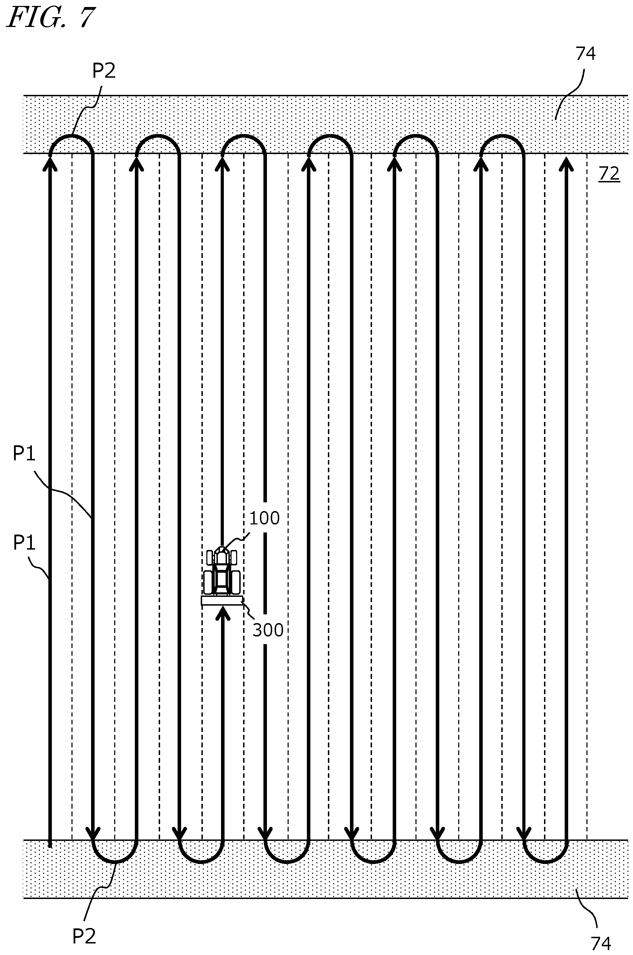

FIG. **7** is a diagram schematically showing an example of the work vehicle **100** automatically traveling along a target path inside a field. In this example, the field includes a work area **72,** in which the work vehicle **100** performs work by using the implement **300,** and headlands **74,** which are located near outer peripheral edges of the field. The user may in advance specify which regions of the field on the map would correspond to the work area **72** and the headlands **74.** The target path in this example includes a plurality of main paths **P1** parallel to one another and a plurality of turning paths **P2** interconnecting the plurality of main paths **P1.** The main paths **P1** are located in the work area **72,** whereas the turning paths **P2** are located in the headlands **74.** Although each main path **P1** in FIG. **7** is illustrated as a linear path, each main path **P1** may also include a curved portion(s). The main paths **P1** may be automatically generated as a user who is looking at a map of the field displayed on the operational terminal **200** or the terminal device **400,** by performing an operation of designating two points near the edge of the field (points A and B in FIG. **7**), for example. In that case, a plurality of main paths **P1** are set so as to be in parallel to a line segment connecting point A and point B designated by the user, and a target path inside the field is generated by connecting these main paths **P1** via turning paths **P2.** Broken lines in FIG. **7** represent a working breadth of the implement **300.** The working breadth is previously-set, and recorded in the storage device **170.** The working breadth may be set and recorded by the user manipulating the operational terminal **200** or the terminal device **400.** Alternatively, the working breadth may be automatically recognized and recorded when the implement **300** is connected to the work vehicle **100.** The interval between the plurality of main paths **P1** may be set in accordance with the working breadth. The target path may be generated based on the user's operation before self-driving is begun. The target path may be generated so as to cover the entirety of the work area **72** inside the field, for example. Along the target path shown in FIG. **7****,** the work vehicle **100** automatically travels while repeating a reciprocating motion from a start point of work to an end point of work. Note that the target path shown in FIG. **7** is merely an example, and the target path may be determined in any arbitrary manner.

Now, an example control by the controller **180** during self-driving inside the field will be described.

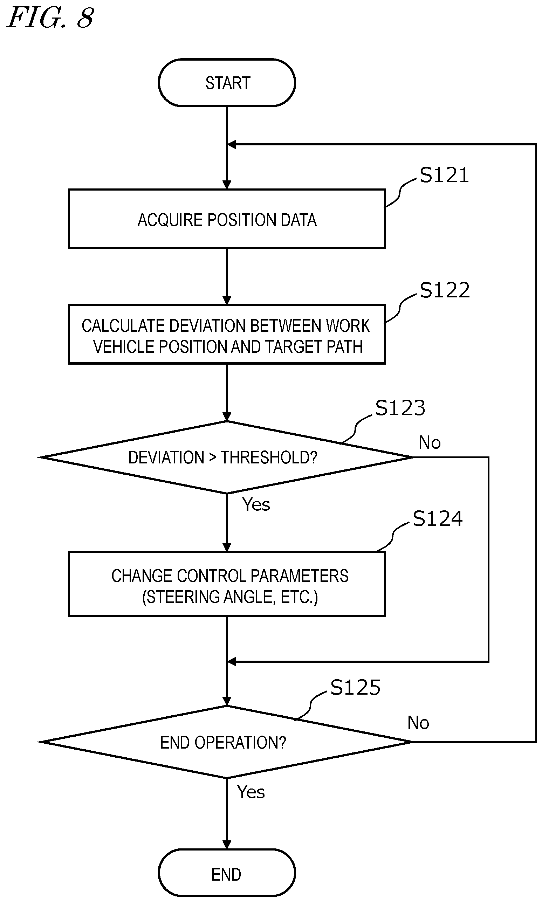

FIG. **8** is a flowchart showing an example operation of steering control to be performed by the controller **180** during self-driving. During travel of the work vehicle **100,** the controller **180** performs automatic steering by carrying out the operation from steps **S121** to **S125** shown in FIG. **8****.** The speed of the work vehicle **100** will be maintained at a previously-set speed, for example. During travel of the work vehicle **100,** the controller **180** acquires data representing the position of the work vehicle **100** that is generated by the GNSS unit **110** (step **S121**). Next, the controller 180 calculates a deviation between the position of the work vehicle **100** and the target path (step **S122**). The deviation represents the distance between the position of the work vehicle **100** and the target path at that time. The controller **180** determines whether the calculated deviation in position exceeds a previously-set threshold or not (step **S123**). If the deviation exceeds the threshold, the controller **180** changes a control parameter of the steering device included in the drive device **240** so as to reduce the deviation, thus changing the steering angle (step **S124**). If the deviation does not exceed the threshold at step **S123,** the operation of step **S124** is omitted. At the following step **S125,** the controller **180** determines whether a command to end operation has been received or not. The command to end operation may be given when the user has instructed that self-driving be suspended through remote operations, or when the work vehicle **100** has arrived at the destination, for example. If a command to end operation has not been given, control returns to step **S121** and the controller **180** performs a similar operation based on a newly measured position of the work vehicle **100.** The controller **180** repeats the operation from steps **S121** to **S125** until a command to end operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the GNSS unit **110** and the target path. Alternatively, a deviation in terms of directions may further be considered in the control. For example, when a directional deviation exceeds a previously-set threshold, where the directional deviation is an angle difference between the orientation of the work vehicle **100** as identified by the GNSS unit **110** and the direction of the target path, the controller **180** may change the control parameter of the steering device of the drive device **240** (e.g., steering angle) in accordance with the deviation.

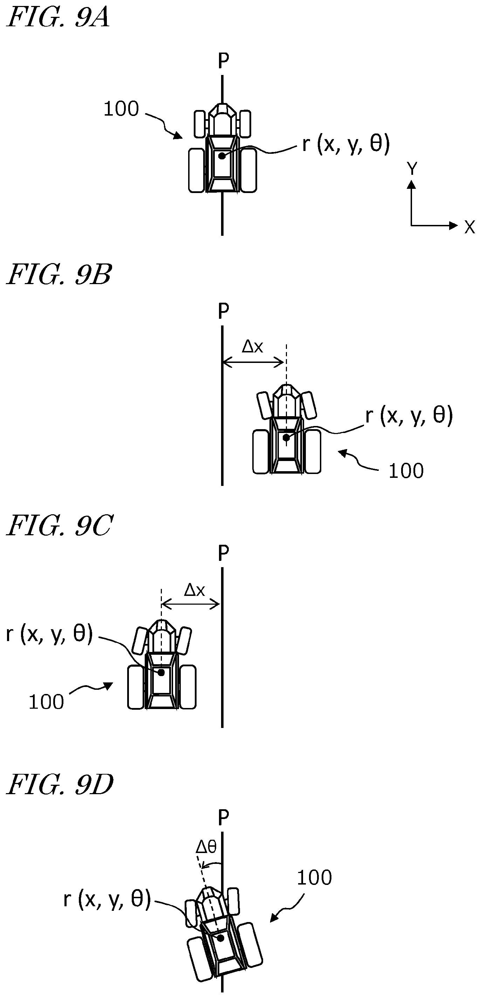

Hereinafter, with reference to FIGS. **9A** to **9D****,** an example of the steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** is a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed; however, the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** halts the work vehicle **100,** for example. At this point, the buzzer **220** may be caused to present an alarm sound or an alert signal may be transmitted to the terminal device **400.** In the case where the obstacle is avoidable, the controller **180** may generate a local path that allows for avoiding the obstacle and control the drive device **240** such that the work vehicle **100** travels along the path.

The work vehicle **100** according to the present embodiment can perform self-traveling outside a field as well as inside the field. Outside the field, the controller **180** is able to detect an object located at a relatively distant position from the work vehicle **100** (e.g., another vehicle, a pedestrian, etc.) based on data output from the cameras **120** or the LiDAR sensor **140.** The controller **180** generates a local path so as to avoid the detected object, and performs speed control and steering control along the local path, thereby achieving self-traveling on a road outside the field.

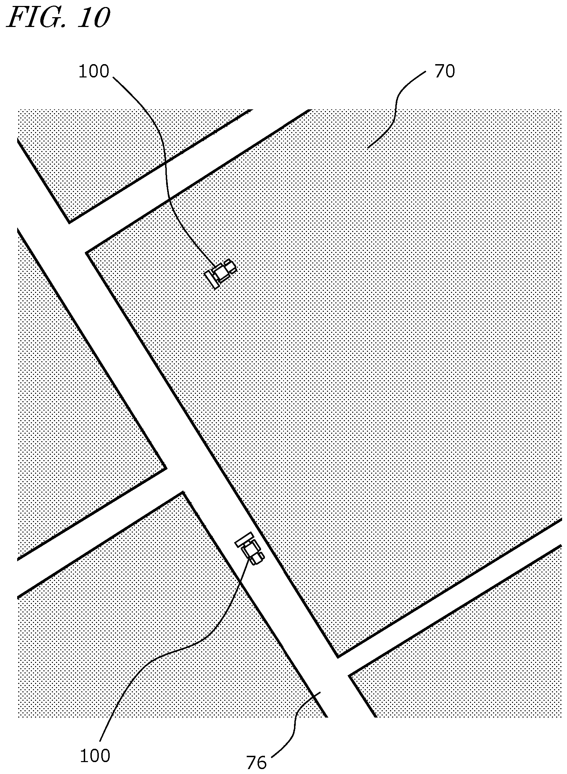

The work vehicle **100** according to the present embodiment is able to automatically travel inside the field and outside the field in an unmanned manner. FIG. **10** is a diagram schematically showing an example situation where a plurality of work vehicles **100** are self-traveling inside a field **70** and on a road **76** outside the field **70.** In the storage device **170,** an environment map of a region including a plurality of fields and roads around the fields, and a target path, are recorded. The environment map and target paths may be generated by management device **600** or the ECU **185.** In the case of traveling on a road, the work vehicle **100** travels along the target path while sensing the surroundings thereof by using the sensing devices such as the cameras **120** and the LiDAR sensor **140,** with the implement **300** being raised. During travel, the controller **180** consecutively generates local paths, and causes the work vehicle **100** to travel along the local paths. As a result, it is possible to perform self-traveling while avoiding obstacles. During travel, the target path may be changed depending on the situation.

### [2-2. generation of work plan]

In accordance with a work plan and a target path generated by the management device **600,** the work vehicle **100** according to the present embodiment automatically performs movement between fields and agricultural work for each field. The work plan contains information on one or more tasks of agricultural work to be performed by the work vehicle **100.** For example, the work plan contains information on one or more tasks of agricultural work to be performed by the work vehicle **100** and the field in which each task of agricultural work is to be performed. The work plan may contain information on a plurality of tasks of agricultural work for the work vehicle **100** to perform over a plurality of work days, and the field in which each task of agricultural work is to be performed. More specifically, the work plan may be a database containing information on a task schedule indicating which agricultural task is to be performed by which agricultural machine at which point of time and in which field for each work day. Hereinafter, an example case will be described where the work plan is the data of such a task schedule. Based on information that is input by the user using the terminal device **400,** the work plan may be generated by the processor **660** of the management device **600.** Hereinafter, an example method of generating the task schedule will be described.

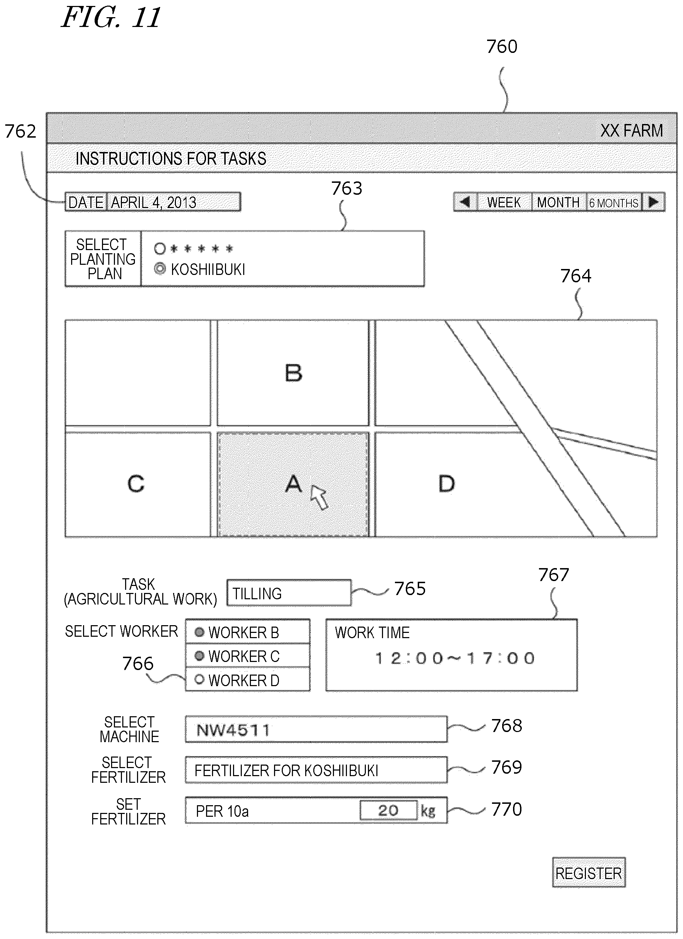

FIG. **11** is a diagram showing an example of a setting screen **760** that is displayed on the display device **430** of the terminal device **400.** In accordance with the user's operation by using the input device **420,** the processor **460** of the terminal device **400** activates application software for schedule generation to cause the setting screen **760** as shown in FIG. **11** on the display device **430.** On this setting screen **760,** the user is able to input information that is necessary for generating the task schedule.

FIG. **11** shows an example of the setting screen **760** in a case where tilling, including spreading of a fertilizer, is performed as an agricultural task in a field for rice cultivation. Without being limited to what is illustrated in the figure, the setting screen **760** may be changed as appropriate. The setting screen **760** in the example of FIG. **11** includes a date setting section **762,** a planting plan selecting section **763,** a field selecting section **764,** a task selecting section **765,** a worker selecting section **766,** a time setting section **767,** a machine selecting section **768,** a fertilizer selecting section **769,** and an application amount setting section **770.**

In the date setting section **762,** a date that has been input with the input device **420** is displayed. The input date is set as a date for performing the agricultural task.

In the planting plan selecting section **763,** a list of names of planting plans that was previously generated is displayed. The user can select a desired planting plan from this list. The planting plan is previously generated for each kind or cultivar of crop, and recorded in the storage device **650** of the management device **600.** The planting plan is a plan as to which crop is to be planted (i.e., grown) in which field. The planting plan is made by an administrator who manages the plurality of fields, etc., prior to planting a crop in a field. In the example of FIG. **11****,** a planting plan for "Koshiibuki", which is a cultivar of rice plant, is selected. In this case, the content to be set on the setting screen **760** is associated with the planting plan for "Koshiibuki".

In the field selecting section **764,** fields in the map are displayed. The user can select any field from among the displayed fields. In the example of FIG. **11****,** a portion indicating "field A" is selected. In this case, the selected "field A" is set as the field in which an agricultural task is to be performed.

In the task selecting section **765,** a plurality of agricultural tasks that are needed in order to cultivate the selected crop are displayed. The user can select one of the plurality of agricultural tasks. In the example of FIG. **11****,** "tilling" is selected from among the plurality of agricultural tasks. In this case, the selected "tilling" is set as the agricultural task to be performed.

In the worker selecting section **766,** previously-registered workers are displayed. The user can select one or more workers from among the plurality of displayed workers. In the example of FIG. **11****,** from among the plurality of workers, "worker B, worker C" are selected. In this case, the selected "worker B, worker C" are set as the workers to perform or manage the given agricultural task. In the present embodiment, because the agricultural machine automatically performs the agricultural task, the worker may not actually perform the agricultural task, but only remotely monitor the agricultural task being performed by the agricultural machine.

In the time setting section **767,** a task time that is input via the input device **420** is displayed. The task time is designated by a start time and an end time. The input task time is set as a scheduled time at which the agricultural task is to be performed.

The machine selecting section **768** is a portion for setting the agricultural machine to be used for the given agricultural task. In the machine selecting section **768,** for example, the types or models of the agricultural machines which have been previously registered by the management device **600,** types or models of usable implements, etc., may be displayed. The user can select a specific machine from among the indicated machines. In the example of FIG. **11****,** an implement model "NW4511" is selected. In this case, this implement is set as the machine to be used for the given agricultural task.

In the fertilizer selecting section **769,** names of a plurality of fertilizers which have been previously registered by the management device **600** may be displayed. The user can select a specific fertilizer from among the indicated plurality of fertilizers. The selected fertilizer is set as the fertilizer to be used for the given agricultural task.

In the application amount setting section **770,** a numerical value that is input via the input device **420** is displayed. The input numerical value is set as an application amount.

Once a planting plan, a field, an agricultural task, a worker, a task time, a fertilizer, and an application amount are input in the setting screen **760** and "SET" is selected, the communicator **490** of the terminal device **400** transmits the input information to the management device **600.** The processor **660** of the management device **600** stores the received information to the storage device **650.** Based on the received information, the processor **660** generates a schedule of agricultural tasks to be performed by each agricultural machine, and stores it to the storage device **650.**

Note that the information of agricultural tasks to be managed by the management device **600** is not limited to what is described above. For example, an ability to set the kind and application amount of an agrochemical to be used for the field on the setting screen **760** may be provided. An ability to set information on agricultural tasks other than the agricultural task shown in FIG. **11** may be provided.

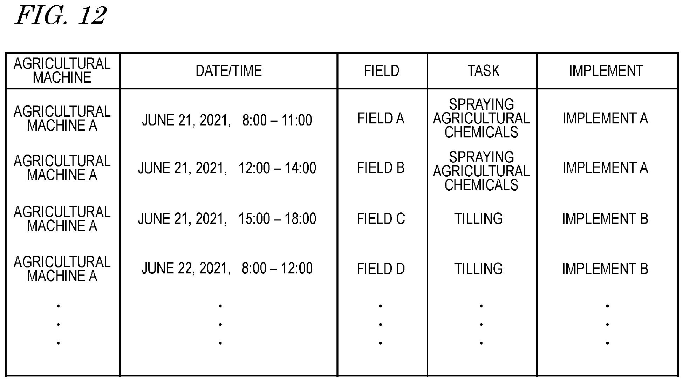

FIG. **12** is a diagram showing an example of a schedule of agricultural tasks (i.e., work plan) to be generated by the management device **600.** The schedule in this example contains, for each registered agricultural machine, information indicating the date and time at which the agricultural task is to be performed, the field, the content of work, and the implement used. In addition to the information shown in FIG. **12****,** depending on the content of work, the schedule may contain other information, e.g., information on the kind of agrochemical or the application amount of an agrochemical, for example. In accordance with such a schedule, the processor **660** of the management device **600** instructs the work vehicle **100** as to an agricultural task. The schedule is downloaded by the controller **180** of the work vehicle **100,** and may be stored also to the storage device **170.** In that case, the controller **180** may spontaneously begin operation in accordance with the schedule stored in the storage device **170.**

Although the work plan is generated by the management device **600** in the present embodiment, the work plan may be generated by another device. For example, the processor **460** of the terminal device **400** or the controller **180** of the work vehicle **100** may have the function of generating or updating the work plan.

### [2-3. generation of map data and path planning using the generated map data]

The management device **600** according to the present embodiment functions as a map data generation system that generates map data for an agricultural machine (which in this example is the work vehicle **100**) to perform self-driving. "Map data for an agricultural machine to perform self-driving" is data in which the positions or regions of things (including geographic features) existing in an environment where the agricultural machine performs self-driving are expressed by a predetermined coordinate system, and may further contain attribute information of those things. To "generate map data for an agricultural machine to perform self-driving" encompasses adding any new data to the map data, and also updating (or modifying) any data contained in the map data.

The management device **600,** functioning as a map data generation system according to the present embodiment, includes: a storage device **650** to store map data for an agricultural machine that performs self-driving; and a processing unit (processor) **660.** When data of a road is not contained in a predetermined region indicated by the map data, the processing unit **660** generates data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle. To "generate data of a road in a predetermined region" encompasses newly adding the road as a geographic feature existing in the predetermined region indicated in the map data. Note that to "generate data of a road in a predetermined region" may encompass, when data of the road is already contained in the predetermined region indicated in the map data, adding or updating (modifying) the data of the attribute information of the road. The "predetermined region" is a previously-set region in the map data, and is recorded in the storage device **650** of the management device **600,** for example.

The management device **600** according to the present embodiment may further cooperate with the control system **160** of the work vehicle **100** to function as a path planning system for the work vehicle **100.** The path planning system according to the present embodiment includes the aforementioned map data generation system. In the path planning system, the processing unit **660** of the management device **600** generates a path for the work vehicle **100** that performs self-driving to travel outside fields by using data of the road in the predetermined region in the map data. In other words, the processing unit **660** of the management device **600** in the path planning system can generate a path (global path) for the work vehicle **100** that performs self-driving by using data of a road that is generated by the processing unit **660** of the management device **600** in the map data generation system.

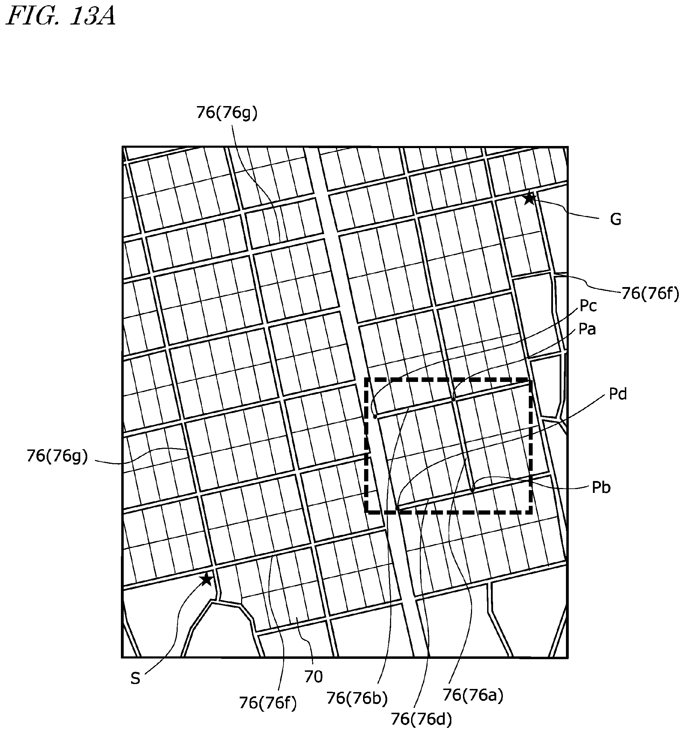

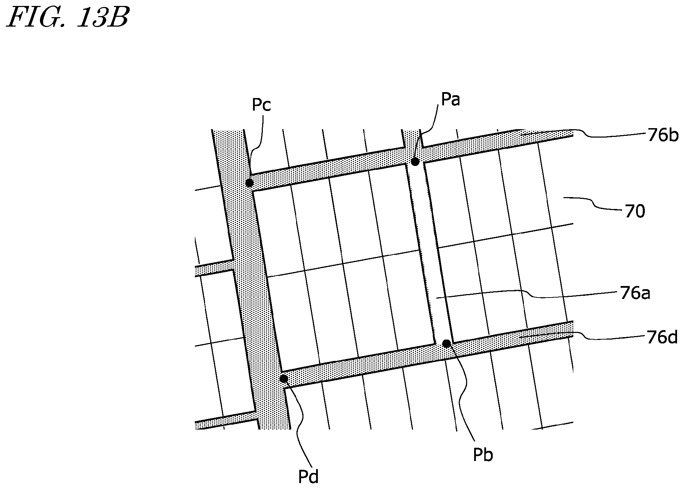

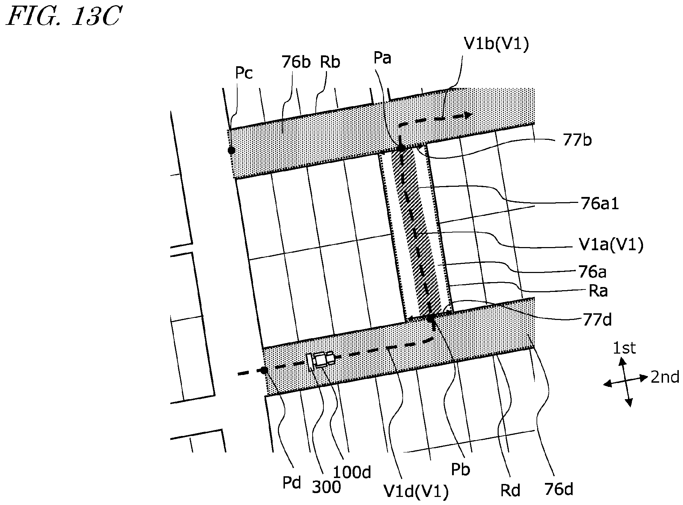

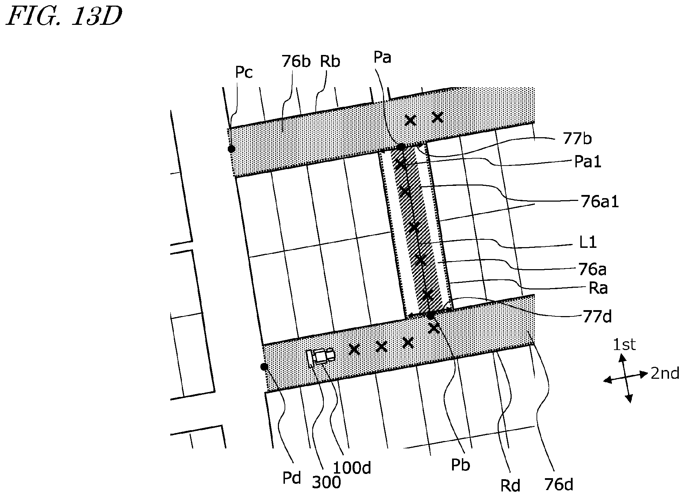

With reference to FIG. **13A****,** FIG. **13B****,** FIG. **13C****,** and FIG. **13D****,** the map data generation system and path planning system according to the present embodiment will be described. FIG. **13A** is a diagram schematically showing a region (surrounding environment) in which the work vehicle **100,** which is an agricultural machine, performs self-driving. FIG. **13B** is a diagram schematically showing a map of a region (surrounding environment) in FIG. **13A** that is surrounded by broken lines. FIG. **13C** and FIG. **13D** are schematic diagrams for describing a procedure by which the map data generation system according to the present embodiment generates map data by using the map data of FIG. **13B****.**

The map data of FIG. **13B** is stored in the storage device **650** of the management device **600,** for example. The map data of FIG. **13B** is a two-dimensional digital map, and may be generated by the management device **600** or another device. The map data of FIG. **13B** may have been generated based on data that was externally acquired by the management device **600.** Although the map shown in FIG. **13B** is a two-dimensional digital map, the map data generation system and path planning system according to the present embodiment are also applicable to map data of other formats, e.g., a point cloud map or a grid map, and are applicable not only to two-dimensional map data but also to three-dimensional map data. Map data as shown in FIG. **13B** is generated across the entirety of the region that may be traveled by the work vehicle **100.**

The region shown in FIG. **13A** includes a plurality of fields **70** where the work vehicle **100** performs agricultural work and roads **76** around the fields (including agricultural roads **76g** and general roads **76f**). In FIG. **13A****,** examples of a departure point **S** and a destination point **G** of self-traveling by the work vehicle **100** are indicated by * symbols. The departure point **S** and the destination point **G** may be set by the user, for example. Alternatively, the management device **600** may set the departure point **S** and the destination point **G** in accordance with the task schedule on the work day. As has been described with reference to FIG. **12****,** the task schedule for each work day is previously generated by the management device **600** and stored in the storage device **650.** In addition to the departure point **S** and the destination point **G,** one or more waypoints may be set. For each of the departure point **S**, the destination point **G,** and the waypoint(s), one or both of a scheduled time of arrival and a scheduled time of departure may be recorded.

Regarding these geographic features, the map data of FIG. **13B****,** which corresponds to the region in FIG. **13A** that is surrounded by broken lines, contains information (data) on their positions (e.g., latitudes and longitudes). The map data of FIG. **13B** may further contain attribute information of the geographic features. For example, the map data of FIG. **13B** may contain, for each road **76,** information indicating a category of the road (e.g., whether it is an agricultural road or not) and information concerning width. Herein, it is assumed that a road **76a,** a road **76b,** and a road **76d,** which exist in the region in FIG. **13A** that is surrounded by broken lines, are all agricultural roads. However, it is assumed that the map data of FIG. **13B** does not contain data of the road **76a** between point **Pa** and point **Pb,** among the geographic features existing in the region in FIG. **13A** that is surrounded by broken lines. In other words, the road **76a** does not exist on the map data of FIG. **13B****.** In FIG. **13B****,** any region where some data of a road exists is shown hatched. In a state where the map data of FIG. **13B** is stored in the storage device **650,** the processing unit **660** of the management device **600** cannot recognize any path that includes the road **76a** as a path for the work vehicle **100.**

With reference to FIG. **13C****,** a procedure by which the map data generation system according to the present embodiment generates map data by using the map data of FIG. **13B** will be described. In this example, the map data generation system according to the present embodiment generates data of the road **76a** in the map data of FIG. **13B****.** In other words, in this example, a region **Ra** corresponding to the road **76a** is previously-set as the predetermined region, and is stored in the storage device **650** of the management device **600,** for example. FIG. **13C** and FIG. **13D** each show the region **Ra** corresponding to the road **76a,** a region **Rb** corresponding to the road **76b,** and a region **Rd** corresponding to the road **76d.** The predetermined region does not need to be commensurate with the region in which the road **76a** exists. For example, the predetermined region for generating data of the road **76a** extending along the top-bottom direction (first direction) in the figures may be a region that is defined by: a line segment **77b** that is a portion of a downward edge (lower edge) of the road **76b,** which is located above the road **76a;** and a line segment **77d** that is a portion of an upward edge (upper edge) of the road **76d,** which is located below the road **76a.** In the figures, the line segment **77b** being a portion of the lower edge of the road **76b** and the line segment **77d** being a portion of the upper edge of the road **76d** are indicated by double-headed arrows. The line segment **77b** and the line segment **77d** are line segments extending along a second direction that intersects the first direction. The second direction may be orthogonal to the first direction, but is not limited to being orthogonal to the first direction. Point **Pa** is located on the line segment **77b,** which is included in the lower edge of the road **76b,** whereas point **Pb** is located on the line segment **77d,** which is included in the upper edge of the road **76d.**

The region in which the processing unit **660** is to acquire the trajectory of the vehicle (predetermined region) may be a substantially rectangular region that is defined by two line segments as in the aforementioned example, but the method of designating the predetermined region is not limited to this example. The user may be given an ability to set/change the predetermined region. The predetermined region in the illustrated example is such that the region corresponding to the road **76a** extends along the first direction; however, a region corresponding to a road that extends in a curve form may be designated as the predetermined region. Not only one but a plurality of predetermined regions may be set, and the following process may be performed for each of the plurality of predetermined regions on the map data.

As shown in FIG. **13C****,** in the map data generation system according to the present embodiment, when data of a road is not contained in a predetermined region (which herein is the region **Ra** corresponding to the road **76a**) in the map data, the processing unit **660** of the management device **600** generates data of the road **76a** in the map data of FIG. **13B** based on: a trajectory **V1a** in the region **Ra** of a vehicle **100d** including a GNSS receiver and traveling in the region **Ra,** the trajectory being acquired based on GNSS data that is output from the GNSS receiver; and attribute information of the vehicle **100d.** In this context, attribute information of the vehicle that has actually traveled the road **76a** may be stored to the storage device **650** in association with the data of the road **76a** in the map data. Through communication with the vehicle **100d,** the processing unit **660** acquires the attribute information of the vehicle **100d.**

Note that, as for the vehicle including a GNSS receiver and traveling in the predetermined region, a trajectory and attribute information of not only an agricultural machine but also any automobile other than an agricultural machine (e.g., a car, a kei truck, or a truck) or any work vehicle intended for tasks other than agricultural work may be used. The trajectory of the vehicle including a GNSS receiver may be a trajectory that is acquired as a continuous line based on GNSS data as in the example shown in FIG. **13C****,** or a trajectory that is obtained by connecting together a plurality of discrete points that are acquired based on GNSS data, as will be described below with reference to FIG. **13D****.**

The example shown in FIG. **13C** will be described more specifically. In the example shown in FIG. **13C****,** the vehicle **100d** turns left in the middle of the road **76d** to go into the road **76a,** travels along the road **76a** from point **Pb** to point **Pa,** goes from point **Pa** into the road **76b,** and travels along the road **76b.** In this while, the processing unit **660** can obtain a trajectory **V1** of the vehicle **100d.** In this example, the region **Rd** corresponding to the road **76d,** the region **Ra** corresponding to the road **76a,** and the region **Rb** corresponding to the road **76b** do not overlap one another, and they abut one another at their border lines. The acquired trajectory **V1** of the vehicle **100d** includes: a trajectory **V1d** of traveling in the region **Rd** corresponding to the road **76d;** a trajectory **V1a** of traveling in the region **Ra** corresponding to the road **76a;** and a trajectory **V1b** of traveling in the region **Rb** corresponding to the road **76b.** Within the acquired trajectory **V1,** the processing unit **660** uses the trajectory **V1a** of the vehicle **100d** in the region **Ra** corresponding to the road **76a** to generate data of the road **76a.** Within the trajectory **V1** of the vehicle **100d,** the processing unit **660** does not use the trajectory **V1b** in the region corresponding to the road **76b** and the trajectory **V1d** in the region corresponding to the road **76d,** but only uses the trajectory **V1a** in the region **Ra** corresponding to the road **76a.** If data of a road does not exist in the predetermined region that is previously set (which herein is the region **Ra**) and if the trajectory **V1** of the vehicle **100d** exists in that predetermined region, then, out of the trajectory **V1,** the processing unit **660** uses the trajectory **V1a** in the region **Ra** to generate data of the road **76a.** For example, the processing unit **660** may obtain the trajectory **V1a** by extracting, out of the trajectory **V1,** a portion which does not overlap the region **Rd** corresponding to the road **76d** and which also does not overlap the region **Rb** corresponding to the road **76b.**

Moreover, the processing unit **660** acquires attribute information of the vehicle **100d.** The attribute information of the vehicle acquired by the processing unit **660** of the management device **600** is information concerning an attribute of the vehicle, e.g., information on the width of the vehicle, information on the type of the vehicle, information as to whether the vehicle is an agricultural machine or not, information as to whether the vehicle has an implement attached thereto or not, and information as to whether the vehicle is an agricultural machine having an implement attached thereto or not. In a case where the vehicle has an implement attached thereto, information on the width of the attached implement, information on the type of the implement, and the like may further be included. For example, the processing unit **660** of the management device **600** may acquire information on the width of the vehicle as the attribute information of the vehicle, and set the width of the road **76a** in the map data to be equal to or greater than the acquired value of vehicle width. For example, the acquired value of vehicle width may be stored to the storage device **650** as a lower limit value of the width of the road **76a.**

For example, as attribute information of the vehicle **100d,** the processing unit **660** acquires the width of the vehicle or the width of the implement attached to the vehicle. For example, as attribute information of the vehicle, the processing unit **660** may acquire information on the width of the vehicle, information as to whether the vehicle has an implement attached thereto or not, and if the vehicle has an implement attached thereto, information on the width of the implement. For example, the processing unit **660** of the management device **600** may, if the vehicle (agricultural machine) has an implement attached thereof, set the width of the road **76a** in the map data to equal to or greater than the acquired value of the implement width; and if the vehicle does not have an implement attached thereto, the processing unit **660** of the management device **600** may set the width of the road **76a** in the map data to equal to or greater than the acquired value of vehicle width. When the vehicle has an implement attached thereto, the processing unit **660** may set whichever one is the greater between the width of the vehicle body and the width of the implement as a lower limit value of the width of the road **76a** in the map data. In the illustrated example, the vehicle **100d** is an agricultural machine (tractor) having the implement **300** attached thereto. As shown in FIG. **13C****,** the processing unit **660** generates diagram data **76a1** in which the width of the trajectory **V1a** (line) of the vehicle **100d** is set to the width of the vehicle body **100d** or to the width of the implement **300,** and sets the generated diagram data **76a1** as data of the road **76a.** The region of the diagram data **76a1** may be regarded as the region indicative of the road **76a.** The processing unit **660** connects (associates) both ends of the road **76a** (diagram data **76a1**) to the roads **76d** and **76b.**

As shown in FIG. **13D****,** the processing unit **660** may refer (acquire) to a plurality of points **Pa1** (indicated by × symbols in the figure) constituting the trajectory **V1a** of the vehicle **100d,** derive a line **L1** that approximates the trajectory **V1a** of the vehicle by least-squares method or the like, generate diagram data **76a1** in which the width of the line **L1** is set to the width of the vehicle body **100d** or to the width of the implement **300,** and set the generated diagram data **76a1** as map data of the road **76a.** In this case, too, the processing unit **660** connects both ends of the road **76a** (diagram data **76a1)** to the roads **76d** and **76b.**

By using the map data generation system according to the present embodiment, map data for an agricultural machine that performs self-driving can be generated efficiently. For example, an agricultural road may possibly be not as well-maintained as a general road, and such an inadequately maintained road may not exist in the map data. By using the map data generation system according to the present embodiment, it becomes possible to add data of the road to the map data, based on information on a vehicle including a GNSS receiver and having actually traveled along that road (which herein is information including the trajectory of the vehicle and attribute information of the vehicle). By using not only the trajectory of the vehicle but also attribute information of that vehicle, it becomes possible to add the attribute information of the road to the map data based on an actual record of the vehicle that has actually traveled along that road. Because the attribute information of the vehicle that has actually traveled along that road is stored to the storage device **650** in association with the data of the road **76a,** map data that is useful for an agricultural machine that performs self-driving can be generated.

By using the path planning system according to the present embodiment, it is possible to generate a suitable path for an agricultural machine that performs self-driving (work vehicle **100**). For example, a road such as an agricultural road that is inadequately maintained can be included in the path (global path) for the agricultural machine that performs self-driving. By using map data that is obtained through the procedure described with reference to FIG. **13C** or FIG. **13D****,** for example, the path planning system according to the present embodiment can generate a path including the road **76a** as the path for the work vehicle **100.** Because the road **76a** can be included in the path, a more suitable path for the agricultural machine that performs self-driving (e.g., a path that allows to arrive at the destination in a shorter distance and/or time) may be generated. In the case where information on the width of each road is contained in the map data, the path planning system according to the present embodiment can combine roads having a width that is equal to or less than the width of the work vehicle **100** to generate a path for the work vehicle **100.** In the case where the work vehicle **100** has an implement attached thereto, a path may be generated by combining roads having a width that is equal to or less than the width of the implement. Information on the type or width of the implement attached to the work vehicle **100** is recorded in the storage device **170** of the work vehicle **100,** for example. The implement may be automatically recognized when it becomes connected to the work vehicle **100,** and recorded.

In the case where the attribute information of the vehicle acquired by the processing unit **660** of the management device **600** contains information as to whether the vehicle is an agricultural machine or not, the processing unit **660** of the management device **600** may set the category of the road **76a** in the map data to agricultural road if the vehicle is an agricultural machine. For example, information on the category (e.g., distinction as to agricultural road/general road) of the road **76a** may be stored to the storage device **650** in association with the data of the road **76a.**

In the case where the attribute information of the vehicle acquired by the processing unit **660** of the management device **600** contains information on the width of the vehicle and information as to whether the vehicle is an agricultural machine having an implement attached thereto or not, the processing unit **660** of the management device **600** may set the width of the road **76a** in the map data to equal to or greater than the width of the implement if the vehicle is an agricultural machine having an implement attached thereto. For example, the acquired value of the implement width may be stored to the storage device **650** as a lower limit value of the width of the road **76a.**

Based on the trajectory of the vehicle traveling in the region **Ra** corresponding to the road **76a,** the processing unit **660** of the management device **600** may acquire the orientation(s) of the vehicle at one or more points existing in the region **Ra,** and set the acquired orientation(s) of the vehicle as the orientation(s) of the respective point(s) on the road **76a.** The processing unit **660** of the management device **600** may cause the orientation(s) of the vehicle at one or more points in the region **Ra** corresponding to the road **76a** to be stored to the storage device **650** as the orientation(s) of the road **76a** at the respective point(s). The processing unit **660** of the management device **600** may generate data of the road **76a** by using the orientations at a plurality of points (positions) in the region **Ra** corresponding to the road **76a.**

The processing unit **660** of the management device **600** may hold the generated data of the road **76a** and other roads existing in the map data of FIG. **13B** in association. For example, the processing unit **660** of the management device **600** may link (associate) the generated data of the road **76a** with data of the road **76b** and road **76d** existing in the map data of FIG. **13B****.** By using map data in which data of the road **76a** and data of the road **76b** and road **76d** are associated, the path planning system according to the present embodiment can generate a suitable path for an agricultural machine that performs self-driving.

With respect to any region of the map data in which data of a road is already contained, too, based on information on a vehicle including a GNSS receiver and actually traveling the road (which herein is information including the trajectory of the vehicle and attribute information of the vehicle), the processing unit **660** of the management device **600** can update data of attribute information of the road in the map data. For example, if map data obtained through the procedure described with reference to FIG. **13C** is stored in the storage device **650,** then data of the road **76a** is contained in the map data. In this case, the processing unit **660** of the management device **600** can update data of attribute information of the road **76a** in the map data based on: a trajectory through the region **Ra** of a vehicle including a GNSS receiver and traveling in the region **Ra** corresponding to the road **76a,** the trajectory being acquired based on GNSS data that is output from the GNSS receiver; and attribute information of that vehicle. Updating the data of a road in the map data allows for maintaining the accuracy of the map data.

For example, in the case where the attribute information of the vehicle acquired by the processing unit **660** of the management device **600** contains information on the width of the vehicle, the processing unit **660** of the management device **600** determines whether the acquired vehicle width is greater than the width of the road **76a** as stored in the storage device **650** or not, and, if the acquired vehicle width is greater than the width of the road **76a** stored in the storage device **650,** rewrites (updates) the width of the road **76a** stored in the storage device **650** to the acquired vehicle width. If the acquired vehicle width is equal to or less than the width of the road **76a** as stored in the storage device **650,** the processing unit **660** of the management device **600** does not update the width of the road **76a** stored in the storage device **650.**

In the case where the attribute information of the vehicle acquired by the processing unit **660** of the management device **600** contains information on the width of the vehicle and information as to whether the vehicle is an agricultural machine having an implement attached thereto or not, the processing unit **660** of the management device **600** may acquire the width of the implement if the vehicle is an agricultural machine having an implement attached thereto, and determine whether the width of the implement is greater than the width of the road **76a** as stored in the storage device **650** or not. If width of the implement is greater than the width of the road **76a** as stored in the storage device **650,** the processing unit **660** of the management device **600** rewrites (updates) the width of the road **76a** stored in the storage device **650** to the width of the implement. If the width of the implement is equal to or less than the width of the road **76a** as stored in the storage device **650,** the processing unit **660** of the management device **600** does not update the width of the road **76a** stored in the storage device **650.**

As in the described example, the processing unit **660** of the management device **600** may update data of a road that it has generated (which herein is data of the road **76a**), or update data of any other road.

When a trajectory of the vehicle including a GNSS receiver and traveling in the predetermined region is acquired based on GNSS data that is output from the GNSS receiver, the processing unit **660** of the management device **600** may further acquire reception intensities of satellite signals by the GNSS receiver included in the vehicle. Based on the reception intensities of satellite signals by the GNSS receiver, the processing unit **660** of the management device **600** may determine whether acquisition of the trajectory of the vehicle was made in a situation where satellite signals can be properly received or not. When the reception intensities of satellite signals by the GNSS receiver are higher than a predetermined intensity, for example, the processing unit **660** of the management device **600** may determine that acquisition of the trajectory of the vehicle was made in a situation where satellite signals can be properly received. The processing unit **660** of the management device **600** may perform the generation or update of data of a road only when determining that acquisition of the trajectory of the vehicle was made in a situation where satellite signals can be properly received.

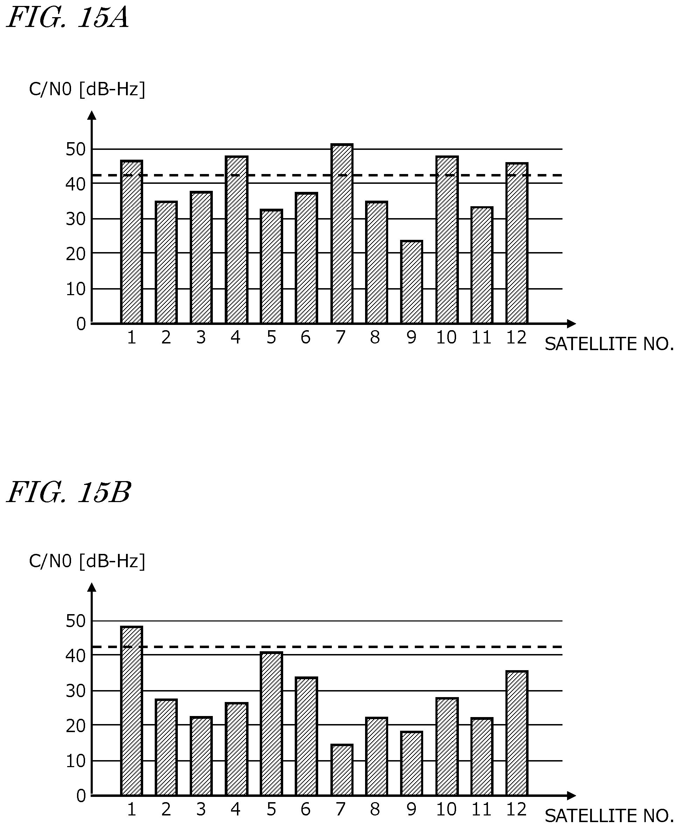

FIG. **15A** and FIG. **15B** are diagrams showing examples of reception intensities of satellite signals. FIG. **15A** shows, in a situation where satellite signals can be properly received, an example of reception intensities of the satellite signals. FIG. **15B** shows, in a situation where satellite signals cannot be properly received (i.e., reception problems may be present), an example of reception intensities of the satellite signals. In these examples, satellite signals are received from twelve satellites, and their reception intensities are expressed by values of carrier to noise density ratio (C/N0). Note that this is only an example, and the number of satellites from which satellite signals are receivable and the expression of reception intensities may depend on the system. As one example, the presence or absence of reception problems can be determined based on whether the number of satellites for which the reception intensity exceeds a previously-set reference value is equal to or greater than a threshold (e.g., 4). In FIG. **15A** and FIG. **15B****,** an example of a reference value for reception intensities is shown by a broken line. When the threshold is e.g. 4, in the example of FIG. **15A****,** the number of satellites for which the reception intensity exceeds the reference value is five, which is equal to or greater than the threshold. Therefore, such a case is determined as a situation where satellite signals can be properly received. On the other hand, in the example of FIG. **15B****,** the number of satellites for which the reception intensity exceeds the reference value is one, which is smaller than the threshold. Therefore, such a case is determined not to be a situation where they can be properly received. Note that the aforementioned method is only an example, and other methods may be used in determining whether each road is a road for which satellite signals can be properly received or not. For example, in a case where the GNSS data includes a value indicating the reliability of positioning, this reliability value may be used in determining whether satellite signals can be properly received or not.

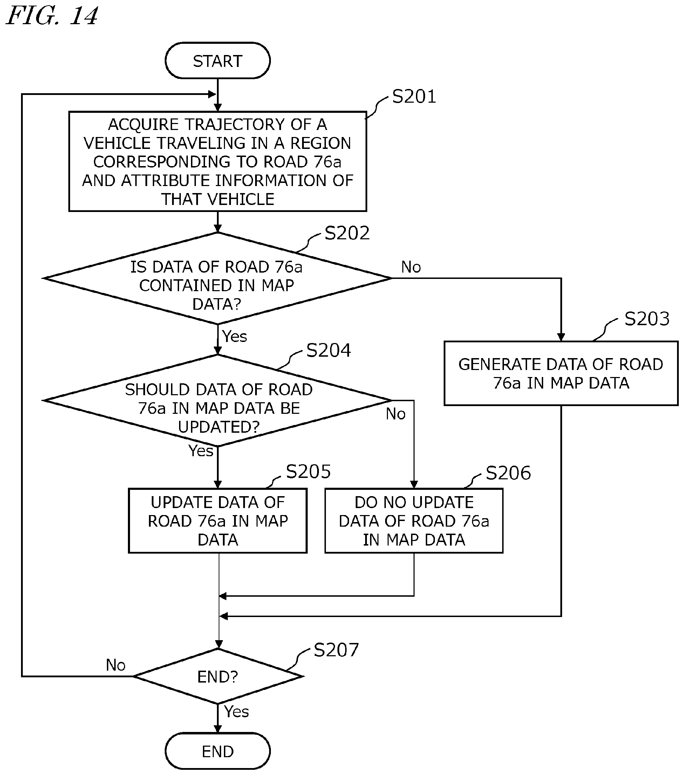

FIG. **14** is a flowchart showing an example of map generation process by the processing unit **660** of the management device **600** that has been described with reference to FIG. **13A** to FIG. **13D****.**

At step **S201,** based on GNSS data that is output from a GNSS receiver of a vehicle including the GNSS receiver and traveling in the region **Ra** corresponding to the road **76a,** the processing unit **660** of the management device **600** acquires a trajectory of the vehicle traveling in the region **Ra** corresponding to the road **76a** and attribute information of that vehicle.

At step **S202,** the processing unit **660** of the management device **600** determines whether data of the road **76a** is contained in map data that is stored in the storage device **650** or not. Note that step **S202** may be performed before step **S201.**

As in the map data of FIG. **13B****,** for example, if data of the road **76a** is not contained in the map data stored in the storage device **650,** the processing unit **660** of the management device **600** generates data of the road **76a** in the map data stored in the storage device **650,** based on the trajectory of the vehicle traveling in the region **Ra** corresponding to the road **76a** and the attribute information of that vehicle as acquired at step **S201** (step **S203**).

As in the map data obtained through the procedure described with reference to FIG. **13C****,** for example, if data of the road **76a** is already contained in the map data stored in the storage device **650,** the processing unit **660** of the management device **600** determines whether the data of the road **76a** in the map data stored in the storage device **650** should be updated or not, based on the trajectory of the vehicle traveling in the region **Ra** corresponding to the road **76a** and the attribute information of that vehicle as acquired at step **S201** (step **S204**).

If it is determined at step **S204** that an update should be made, the processing unit **660** of the management device **600** updates the data of the attribute information of the road **76a** in the map data stored in the storage device **650** (step **S205**). If it is determined at step **S204** that an update is not necessary, the processing unit **660** of the management device **600** does not update the data of the road **76a** in the map data stored in the storage device **650** (step **S206**).

Until a command to end is given (step **S207**), the processing unit **660** of the management device **600** repeats the operation from step **S201** to step **S206.**

An example has been described above where the processing unit (processor) **660** of the management device **600** functions as the processing unit of the map data generation system; however, in the map data generation system, a part or a whole of the processing that is performed by the processing unit **660** of the management device **600** may be performed by another device. Such another device may be any of the terminal device **400** (processor **460**), the controller **180** of the work vehicle **100** (ECU **186** for map generation), or the operational terminal **200.** For example, in a case where a part of the processing performed by the processing unit **660** of the management device **600** is performed by the controller **180,** a combination of the management device **600** and the controller **180** functions as the processing unit of the map data generation system. In the case where the combination of the management device **600** and the controller **180** functions as the processing unit of the map data generation system, map data may be stored to the storage device **170** of the work vehicle **100.**

### [2-4. local path planning]

When the work vehicle **100** is traveling outside the field, obstacles such as pedestrians or other vehicles may exist on or near a global path. In order to prevent the work vehicle **100** from colliding the obstacles, the ECU **185** in the controller **180** consecutively generates local paths that allow for avoiding obstacles during travel of the work vehicle **100.** While the work vehicle **100** is traveling, the ECU **185** generates local paths based on sensor data that is acquired by the sensing devices (the obstacle sensors **130,** the LiDAR sensor **140,** the cameras **120,** etc.) included in the work vehicle **100.** A local path is defined by a plurality of waypoints following along part of a second path **30B.** Based on the sensor data, the ECU **185** determines whether any obstacle exists on or near the path ahead of the work vehicle **100.** If any such obstacle exists, the ECU **185** generates a local path by setting a plurality of waypoints so as to avoid the obstacle. If no obstacle exists, the ECU **185** generates a local path essentially in parallel to the second path **30B.** Information representing the generated local path is sent to the ECU **184** for self-driving control. The ECU **184** controls the ECU **181** and the ECU **182** so that the work vehicle **100** will travel along the local path. As a result, the work vehicle **100** is able to travel while avoiding the obstacle. In a case where a traffic light exists on the road traveled by the work vehicle **100,** the work vehicle **100** may perform an operation of recognizing the traffic light based on images captured by the cameras **120,** stopping at a red light, and pulling out on a green light, for example.

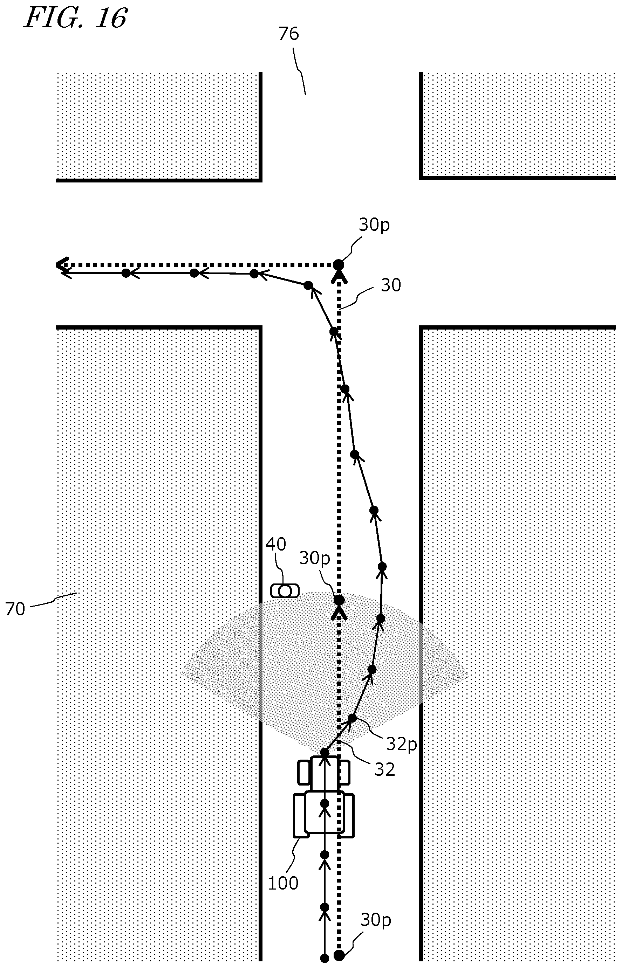

FIG. **16** is a diagram showing an example of a global path and a local path that are generated in an environment in which the obstacle exists. In FIG. **16****,** a global path **30** is illustrated with dotted arrows, wherein a local path **32** that is consecutively generated during travel is illustrated with solid arrows. The global path **30** is defined by a plurality of waypoints **30p.** The local path **32** is defined by a plurality of waypoints **32p** that is set in shorter intervals than are the waypoints **30p.** Each waypoint has information of a position and an orientation, for example. By setting the plurality of waypoints **30p** at a plurality of sites including an intersection between the roads **76,** the management device **600** generates the global path **30.** The interval between waypoints **30p** is relatively long, e.g., on the order of several meters to several ten meters. During travel of the work vehicle **100,** the ECU **185** sets the plurality of waypoints **32p** based on sensor data that is output from the sensing devices, thereby generating the local path **32.** The interval between waypoints **32p** in the local path **32** is shorter than the interval between waypoints **30p** in the global path **30.** The interval between waypoints **32p** may be e.g. on the order of several ten centimeters (cm) to several meters (m). The local path **32** is generated in a relatively narrow range (e.g., on the order of several meters) starting from the position of the work vehicle **100.** FIG. **16** shows a consecutive local path **32** generated while the work vehicle **100** travels along the roads **76** between the fields **70** and turns left at the intersection. During movement of the work vehicle **100,** the ECU **185** repeats the operation of generating a local path up to a point that is e.g. several meters ahead of the position of the work vehicle **100** as estimated by the ECU **184.** The work vehicle **100** travels along the local path as it is consecutively generated.

In the example shown in FIG. **16****,** an obstacle **40** (e.g., a person) exists ahead of the work vehicle **100.** FIG. **16** illustrates an example of a range of sensing by the sensing devices such as the cameras **120,** the obstacle sensors **130,** or the LiDAR sensor **140** mounted on the work vehicle **100.** In such a situation, the ECU **185** generates the local path **32** so as to avoid the obstacle **40** detected based on the sensor data. Based on the sensor data and the width of the work vehicle **100** (and, if an implement is attached, including also the width of the implement), the ECU **185** determines whether the work vehicle **100** may possibly collide with the obstacle **40,** for example. If it is possible for the work vehicle **100** to collide with the obstacle **40,** the ECU **185** generates the local path **32** by setting the plurality of waypoints **32p** so as to avoid the obstacle **40.** The ECU **185** recognizes not only the presence or absence of the obstacle **40,** but also the road surface state (e.g., muddy, sunken, and so on) based on the sensor data, and if any site of traveling difficulty is detected, generates the local path **32** so as to avoid such a site. The work vehicle **100** travels along the local path **32.** If the obstacle **40** cannot be avoided no matter how the local path **32** is set, the controller **180** may halt the work vehicle **100.** At this time, the controller **180** may transmit an alert signal to the terminal device **400** to call attention of the supervisor. After halting, once it is recognized that the obstacle **40** has moved so that there is no fear of collision, the controller **180** may restart travel of the work vehicle **100.**

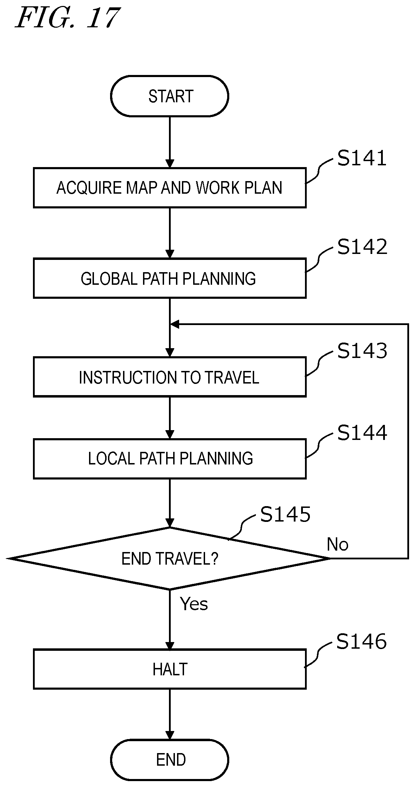

FIG. **17** is a flowchart showing an operation of path planning and travel control according to the present embodiment. By performing the operation from steps **S141** to **S146** shown in FIG. **17****,** it is possible to perform path planning and to control self-traveling of the work vehicle **100.**

In the example shown in FIG. **17****,** first, the management device **600** acquires a map and a work plan from the storage device **650** (step **S141**). Next, based on the map and the work plan, the management device **600** performs global path planning for the work vehicle **100** with the aforementioned method (step **S142**). Global path planning can be performed at any timing before the work vehicle **100** begins traveling. The global path planning may be performed immediately before start of travel of the work vehicle **100,** or any time before the previous day of the start of travel. The global path may be generated based on information (e.g., a departure point, a destination point, waypoints, and so on) that is input by the user via the terminal device **400.** As described earlier, when generating a path to a field, or a path from a field to another place (e.g., a storage location or a standby location of the work vehicle **100**), based on the attribute information of each road on the map, the management device **600** generates as a path for the work vehicle **100** at least one of: a path that gives priority to agricultural roads; a path that gives priority to roads following along a particular geographic feature; and a path that gives priority to roads on which satellite signals can be properly received. The management device **600** transmits data representing the generated global path to the work vehicle **100.** Thereafter, at a predetermined timing, the management device **600** gives an instruction for the work vehicle **100** to travel. Upon receiving this, the controller **180** of the work vehicle **100** controls the drive device **240** so as to begin travel of the work vehicle **100** (step **S143**). As a result of this, the work vehicle **100** begins traveling. The timing of start of travel may be set to any appropriate timing that allows the work vehicle **100** to arrive at the field by a scheduled start time of the first agricultural task on each work day as indicated by the work plan, for example. During travel of the work vehicle **100,** with the aforementioned method, the ECU **185** of the controller **180** performs local path planning for avoiding collision with obstacles (step **S144**). If no obstacle is detected, the ECU **185** generates a local path essentially in parallel to the global path. Upon detection of an obstacle, the ECU **185** generates a local path that allows for avoiding the obstacle. Next, the ECU **184** determines whether or not to end travel of the work vehicle **100** (step **S145**). For example, if a local path that allow for avoiding the obstacle could not be generated, or if the work vehicle **100** has arrived at the destination point, the ECU **184** halts the work vehicle **100** (step **S146**). If no obstacle is detected, or if a local path that allows for avoiding the obstacle has been generated, control returns to step **S143,** and the ECU **184** causes the work vehicle **100** to travel along the generated local path. Thereafter, until it is determined at step **S145** that travel is to be ended, the operation from steps **S143** to **S145** is repeated.

Through the above operation, the work vehicle **100** can automatically travel along the generated path, without colliding with obstacles.

In the example of FIG. **17****,** once generated, the global path is not changed until arrival at the destination. Without being limited to this example, the global path may be modified during travel of the work vehicle **100.** For example, during travel of the work vehicle **100,** based on sensor data that is acquired by the sensing devices such as the cameras **120** or the LiDAR sensor **140,** the ECU **185** may recognize at least one of: the state of the road being traveled by the work vehicle **100,** the state of vegetation around the work vehicle **100,** and the weather state; and if the recognized state satisfies a predetermined condition, the ECU **185** may change the global path. While the work vehicle **100** is traveling along the global path, some roads may be difficult to pass. For example, roads may be made muddy by torrential rains, the road surface may be sunken, or accidents or other causes may hinder passage. Alternatively, vegetation around the agricultural road may be more flourishing than expected, or a newly constructed building may make it difficult to receive satellite signals from the GNSS satellites. In consideration of such situations, the ECU **185** may detect roads that are difficult to pass based on sensor data acquired during travel of the work vehicle **100,** and change the path so as to avoid any such road. Moreover, if the path has been changed, the ECU **185** may cause the changed path to be stored to the storage device **170,** and transmit the information of the changed path to the management device **600.** In that case, the management device **600** may adopt the changed path when next time generating a path for the same field. This allows for flexible path planning that is adapted to the changing traveling environment.

As described above, the present disclosure encompasses map data generation systems and path planning systems as recited in the following Items.

### [Item 1]

A map data generation system comprising:
a storage device to store map data for an agricultural machine that performs self-driving; and
a processing unit to, when data of a road is not contained in a predetermined region indicated by the map data, generate data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

### [Item 2]

The map data generation system of Item 1, wherein
the processing unit is operable to:
when the attribute information of the vehicle contains information on a width of the vehicle, set a width of the road in the predetermined region to equal to or greater than the width of the vehicle.

### [Item 3]

The map data generation system of Item 1, wherein the processing unit is operable to:
when the attribute information of the vehicle contains information on a width of the vehicle and information as to whether the vehicle is an agricultural machine having a work vehicle attached thereto or not, and the vehicle is an agricultural machine having an implement attached thereto, set a width of the road in the predetermined region to equal to or greater than a width of the implement.

### [Item 4]

The map data generation system of Item 2 or 3, wherein the processing unit is operable to:
when the attribute information of the vehicle contains information as to whether the vehicle is an agricultural machine or not, and the vehicle is an agricultural machine, set a category of the road in the predetermined region to agricultural road.

### [Item 5]

The map data generation system of any one of Items 1 to 4, wherein the processing unit
sets an orientation of the vehicle in the predetermined region as an orientation of the road in the predetermined region, the orientation of the vehicle being acquired based on the trajectory of the vehicle at least in the predetermined region.

### [Item 6]

The map data generation system of any one of Items 1 to 5, wherein the processing unit
holds the generated road in the predetermined region and another road existing in the map data in association.

### [Item 7]

The map data generation system of any one of Items 1 to 6, wherein the processing unit is operable to:
when the data of the road is contained in the predetermined region, update the data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

### [Item 8]

The map data generation system of Item 7, wherein the processing unit is operable to: when the attribute information of the vehicle contains a width of the vehicle, and the width of the vehicle is greater than a width of the road in the predetermined region, update the width of the road in the predetermined region to the width of the vehicle.

### [Item 9]

The map data generation system of Item 7, wherein the processing unit is operable to: when the attribute information of the vehicle includes a type of the vehicle, the vehicle is an agricultural machine having an implement attached thereto, and a width of the implement is greater than a width of the road in the predetermined region, update the width of the road in the predetermined region to the width of the implement.

### [Item 10]

The map data generation system of any one of Items 1 to 9, wherein the processing unit is operable to:
further acquire reception intensities of satellite signals by the GNSS receiver included in the vehicle when the trajectory of the vehicle in the predetermined region is acquired, and,
when the reception intensities are higher than a predetermined intensity, generate or update data of the road in the predetermined region in the map data.

### [Item 11]

The map data generation system of any one of Items 1 to 10, wherein the processing unit is operable to:
as the attribute information of the vehicle, acquire information on a width of the vehicle, information as to whether the vehicle has a work vehicle attached thereto or not, and information on a width of the work vehicle if the vehicle has a work vehicle attached thereto;
when the vehicle has an implement attached thereto, set a width of the road in the predetermined region to equal to or greater than a width of the implement, and,
when the vehicle does not have an implement attached thereto, set the width of the road in the predetermined region to equal to or greater than the width of the vehicle.

### [Item 12]

A path planning system comprising the map data generation system of any one of Items 1 to 11, wherein
the processing unit generates a path for the agricultural machine that performs self-driving to travel outside fields by using data of the road in the predetermined region in the map data.

### [Item 13]

The path planning system of Item 12, wherein the processing unit
generates the path by combining roads having a width which is equal to or less than a width of the agricultural machine.

### [Item 14]

The path planning system of Item 12, wherein the processing unit is operable to:
when the agricultural machine has an implement attached thereto, generate the path by combining roads having a width which is equal to or less than a width of the implement.

### INDUSTRIAL APPLICABILITY

The technique according to the present disclosure is applicable to a map data generation system and a path planning system that generates map data for an agricultural machine to perform self-driving, e.g., a tractor, a harvester, a rice transplanter, a vehicle for crop management, a vegetable transplanter, a mower, a seeder, a spreader, or an agricultural robot, for example.

### REFERENCE SIGNS LIST

40...obstacle, **50**...GNSS satellite, **60**...reference station, **70**...field, **72**...work area, **74**...headland, **76**...road, **80**...network, **100**...work vehicle, **101**...vehicle body, **102**...prime mover (engine), **103**...transmission, **104**...wheel, **105**...cabin, **106**... steering device, **107**...driver's seat, **108**...linkage device, **110**...positioning device (GNSS unit), **111**...GNSS receiver, **112**...RTK receiver, **115**...inertial measurement unit (IMU), **116**...processing circuit, **120**... camera, **130**...obstacle sensor, **140**...LiDAR sensor, **150**...sensors, **152**...steering wheel sensor, **154**...angle-of-turn sensor, **156**...axle sensor, **160**... control system, **170**... storage device, **180**... controller, 1**8**1 to **186**...ECU, **190**... communicator, **200**...operational terminal, **210**...operation switches, **220**...buzzer, **240**...drive device, **300**... implement, **340**...drive device, **380**...controller, **390**...communicator, **400**... terminal device, **420**... input device, **430**...display device, **450**... storage device, **460**...processor, **470**...ROM, **480**...RAM, **490**... communicator, **600**...management device, **650**...storage device, **660**...processor (processing unit), **670**...ROM, **680**...RAM, **690**... communicator

## Claims

1. A map data generation system comprising:
a storage device to store map data for an agricultural machine that performs self-driving; and
a processing unit to, when data of a road is not contained in a predetermined region indicated by the map data, generate data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

2. The map data generation system of claim 1, wherein
the processing unit is operable to:
when the attribute information of the vehicle contains information on a width of the vehicle, set a width of the road in the predetermined region to equal to or greater than the width of the vehicle.

3. The map data generation system of claim 1, wherein the processing unit is operable to:
when the attribute information of the vehicle contains information on a width of the vehicle and information as to whether the vehicle is an agricultural machine having a work vehicle attached thereto or not, and the vehicle is an agricultural machine having an implement attached thereto, set a width of the road in the predetermined region to equal to or greater than a width of the implement.

4. The map data generation system of claim 2 or 3, wherein the processing unit is operable to:
when the attribute information of the vehicle contains information as to whether the vehicle is an agricultural machine or not, and the vehicle is an agricultural machine, set a category of the road in the predetermined region to agricultural road.

5. The map data generation system of any one of claims 1 to 4, wherein the processing unit
sets an orientation of the vehicle in the predetermined region as an orientation of the road in the predetermined region, the orientation of the vehicle being acquired based on the trajectory of the vehicle at least in the predetermined region.

6. The map data generation system of any one of claims 1 to 5, wherein the processing unit
holds the generated road in the predetermined region and another road existing in the map data in association.

7. The map data generation system of any one of claims 1 to 6, wherein the processing unit is operable to:
when the data of the road is contained in the predetermined region, update the data of the road in the predetermined region based on: a trajectory of a vehicle including a GNSS receiver and traveling in the predetermined region, the trajectory being acquired in the predetermined region based on GNSS data that is output from the GNSS receiver; and attribute information of the vehicle.

8. The map data generation system of claim 7, wherein the processing unit is operable to: when the attribute information of the vehicle contains a width of the vehicle, and the width of the vehicle is greater than a width of the road in the predetermined region, update the width of the road in the predetermined region to the width of the vehicle.

9. The map data generation system of claim 7, wherein the processing unit is operable to: when the attribute information of the vehicle includes a type of the vehicle, the vehicle is an agricultural machine having an implement attached thereto, and a width of the implement is greater than a width of the road in the predetermined region, update the width of the road in the predetermined region to the width of the implement.

10. The map data generation system of any one of claims 1 to 9, wherein the processing unit is operable to:
further acquire reception intensities of satellite signals by the GNSS receiver included in the vehicle when the trajectory of the vehicle in the predetermined region is acquired, and,
when the reception intensities are higher than a predetermined intensity, generate or update data of the road in the predetermined region in the map data.

11. The map data generation system of any one of claims 1 to 10, wherein the processing unit is operable to:
as the attribute information of the vehicle, acquire information on a width of the vehicle, information as to whether the vehicle has a work vehicle attached thereto or not, and information on a width of the work vehicle if the vehicle has a work vehicle attached thereto;
when the vehicle has an implement attached thereto, set a width of the road in the predetermined region to equal to or greater than a width of the implement, and,
when the vehicle does not have an implement attached thereto, set the width of the road in the predetermined region to equal to or greater than the width of the vehicle.

12. A path planning system comprising the map data generation system of any one of claims 1 to 11, wherein
the processing unit generates a path for the agricultural machine that performs self-driving to travel outside fields by using data of the road in the predetermined region in the map data.

13. The path planning system of claim 12, wherein the processing unit
generates the path by combining roads having a width which is equal to or less than a width of the agricultural machine.

14. The path planning system of claim 12, wherein the processing unit is operable to:
when the agricultural machine has an implement attached thereto, generate the path by combining roads having a width which is equal to or less than a width of the implement.
